(19) Europäisches Patentamt
European Patent Office
Office européen des brevets

(11) EP 4 516 818 B1

(12) # EUROPEAN PATENT SPECIFICATION

(45) Date of publication and mention of the grant of the patent:
**24.06.2026 Bulletin 2026/26**

(21) Application number: **22943505.2**

(22) Date of filing: **14.11.2022**

(51) International Patent Classification (IPC):
***C07F 17/00*** *(2006.01)* ***C08F 36/06*** *(2006.01)*
***C08F 4/52*** *(2006.01)* ***C08F 210/02*** *(2006.01)*
***C07F 7/10*** *(2006.01)*

(52) Cooperative Patent Classification (CPC):
(C-Sets available)
**C07F 17/00; C07F 7/10** (Cont.)

(86) International application number:
**PCT/CN2022/131728**

(87) International publication number:
**WO 2023/226318 (30.11.2023 Gazette 2023/48)**

(54) **METALLOCENE COMPLEX AND PREPARATION METHOD THEREFOR, CATALYST COMPOSITION, OLEFIN POLYMERIZATION METHOD AND OLEFIN POLYMER**

METALLOCENKOMPLEX UND HERSTELLUNGSVERFAHREN DAFÜR, KATALYSATORZUSAMMENSETZUNG, OLEFINPOLYMERISIERUNGSVERFAHREN UND OLEFINPOLYMER

COMPLEXE MÉTALLOCÈNE ET SON PROCÉDÉ DE PRÉPARATION, COMPOSITION DE CATALYSEUR, PROCÉDÉ DE POLYMÉRISATION D'OLÉFINE ET POLYMÈRE D'OLÉFINE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **27.05.2022 CN 202210586608**

(43) Date of publication of application:
**05.03.2025 Bulletin 2025/10**

(73) Proprietors:
- **China Petroleum & Chemical Corporation**
  **Beijing 100728 (CN)**
- **Sinopec (Beijing) Research Institute of Chemical Industry Co., Ltd.**
  **Beijing 100013 (CN)**

(72) Inventors:
- **GAO, Nian**
  **Beijing 100013 (CN)**
- **CHEN, Jianjun**
  **Beijing 100013 (CN)**
- **WU, Ning**
  **Beijing 100013 (CN)**
- **HAO, Jianguo**
  **Beijing 100013 (CN)**
- **LI, Hongbo**
  **Beijing 100013 (CN)**
- **XU, Lin**
  **Beijing 100013 (CN)**

(74) Representative: **Hoffmann Eitle**
**Patent- und Rechtsanwälte PartmbB**
**Arabellastraße 30**
**81925 München (DE)**

(56) References cited:
**WO-A1-03/045964** **CN-A- 106 366 226**
**CN-A- 108 690 167** **CN-A- 108 811 500**
**CN-A- 112 745 432** **CN-A- 114 516 930**

- **CHEN RUNHAI ET AL: "Synthesis of Heterocyclic-Fused Cyclopentadienyl Scandium Complexes and the Catalysis for Copolymerization of Ethylene and Dicyclopentadiene", ORGANOMETALLICS, vol. 34, no. 2, 12 January 2015 (2015-01-12), pages 455 - 461, XP093111773, ISSN: 0276-7333, DOI: 10.1021/om500992v**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- **CHUNJI WU ET AL: "cis-1,4-Selective Copolymerization of Ethylene and Butadiene: A Compromise between Two Mechanisms", ANGEWANDTE CHEMIE, VERLAG CHEMIE, HOBOKEN, USA, vol. 56, no. 24, 4 May 2017 (2017-05-04), pages 6975 - 6979, XP072090744, ISSN: 1433-7851, DOI: 10.1002/ANIE.201702128**
- **CHEN RUNHAI, YAO CHANGGUANG, WANG MEIYAN, XIE HONGYAN, WU CHUNJI, CUI DONGMEI: "Synthesis of Heterocyclic-Fused Cyclopentadienyl Scandium Complexes and the Catalysis for Copolymerization of Ethylene and Dicyclopentadiene", ORGANOMETALLICS, AMERICAN CHEMICAL SOCIETY, vol. 34, no. 2, 26 January 2015 (2015-01-26), pages 455 - 461, XP093111773, ISSN: 0276-7333, DOI: 10.1021/om500992v**



(52) Cooperative Patent Classification (CPC): (Cont.)

C-Sets
**C08F 36/06, C08F 4/52;**
**C08F 210/02, C08F 236/06, C08F 2500/27**

## Description

### Cross Reference to Related Applications

This application claims the benefit of Chinese patent application 202210586608.1, filed on May 27, 2022.

### Field of the Invention

The present invention relates to a metallocene complex and a preparation method therefor. The present invention also relates to a catalyst composition containing the metallocene complex. The present invention further relates to an olefin polymerization method using the catalyst composition.

### Background of the Invention

Metallocene complexes refer to compounds in which a central metal is coordinated with one or more cyclopentadienyl or a derivative thereof, and play a very important role as a catalyst in various polymerization reactions. The metallocene complexes exhibit different catalytic properties in polymerization reactions due to different types of ligands and central metals.

There have been many suggestions for polymerization catalysts for the polymerization of conjugated dienes. For example, it is known to obtain high cis-1,4-conjugated diene polymers by using a composite catalyst system containing a neodymium compound and an organoaluminum compound as main components. Some of these composite catalyst system have been used industrially as polymer catalyst systems for butadiene. However, there has always been a need for a method for efficiently manufacturing a conjugated diene polymer having a high content of cis-1,4-structure in a microstructure, a high molecular weight, and a narrow molecular weight distribution. Therefore, it is necessary to develop a polymerization catalyst.

As a widely used and easily available monomer, ethylene is widely used in the plastics industry. Conjugated dienes, particularly butadiene and isoprene, are the most important monomers for the synthesis of rubbers. Butadiene, as a by-product in the process of preparing ethylene by a petroleum route, was once similar in price to ethylene. Due to the change in the ethylene preparation route, the production of butadiene is decreased, resulting in a significant increase in the price of butadiene. In contrast, the price of ethylene is reduced. Therefore, it is attractive to use ethylene as a raw material for preparing rubber for tires, and the raw material cost can be greatly saved. However, it is difficult to copolymerize conjugated dienes and $\alpha$-olefins due to their different polymerization mechanisms. Thus, it is an extremely challenging task to use the same catalytic system to catalyze the copolymerization of ethylene and conjugated dienes, and realizing the copolymerization of ethylene and conjugated dienes has always been the direction of academic and industrial efforts. The development of metallocene complexes with high catalytic activity, a relatively high structural regularity control capability for a conjugated diene structural unit and a relatively high capability for copolymerizing ethylene and conjugated dienes is highly attractive.

In 2015, Michiue *et al.* reported a series of silicon-bridged disubstituted indenylzirconiums for the preparation of a copolymer of ethylene/propylene and butadiene in the presence of hydrogen (K. Michiue, M. Mitani, T. Fujita, Catalysts 2015, 5, 2001-2017). The catalyst has higher activity and can result in polymers with a higher molecular weight. As the steric hindrance of substituents on indene increases, the vinyl content of the copolymer increases. However, the insertion rate of butadiene in the obtained copolymer is low, and the copolymer contains cyclopropyl and cyclopentyl structures. Rare earth catalysts have also been attempted for the copolymerization of ethylene and conjugated dienes due to their better affinity for conjugated dienes. Boisson *et al.* reported a series of dicyclopentadienylneodymium catalysts that can efficiently catalyze the copolymerization of ethylene and butadiene (M. Llauro, C. Monnet, F. Barbotin, V. Monteil, R. Spitz, C. Boisson, Macromolecules 2001, 34, 6304-6311; H. Nsiri, I. Belaid, P. Larini, J. Thuilliez, C. Boisson, L. Perrin, ACS Catal. 2016, 6, 1028-1036). The butadiene content of the copolymer is high and butadiene mainly exists in the *trans*-1,4-structure. The molecular weight of the polymer is not high enough and the polymer contains a cyclohexyl structure.

Chen et al. in "Synthesis of Heterocyclic-Fused Cyclopentadienyl Scandium Complexes and the Catalysis for Copolymerization of Ethylene and Dicyclopentadiene", Organometallics, vol. 34, No. 2, 2015, describes the synthesis of a series of heterocyclic-fused cyclopentadienyl scandium bis(alkyl) complexes by alkane elimination reaction of $Sc(CH_2SiMe_3)_3(THF)_2$.

Transition metal compounds having heterocyclic fused five-membered ring $\pi$ ligands and use of the compounds in catalyzing the polymerization of monoolefins have been reported, and the compounds have the advantages of high activity and high molecular weight. However, there are few reports on the catalytic copolymerization of ethylene and conjugated dienes. There is no report on the research of bis(cyclopentadienyl) rare earth catalysts with heterocyclic fusion and use thereof in copolymerization of ethylene and conjugated dienes.

**Summary of the Invention**

An object of the present invention is to provide a catalyst composition. The catalyst composition has an improved catalytic activity and can precisely control the structure of a conjugated diene structural unit, thereby improving the structural regularity of the conjugated diene structural unit in the prepared polymer, and can effectively control the copolymerization composition of a copolymer when used in the copolymerization of ethylene and conjugated dienes.

According to a first aspect of the present invention, the present invention provides a metallocene complex, having a structure shown in a formula I,

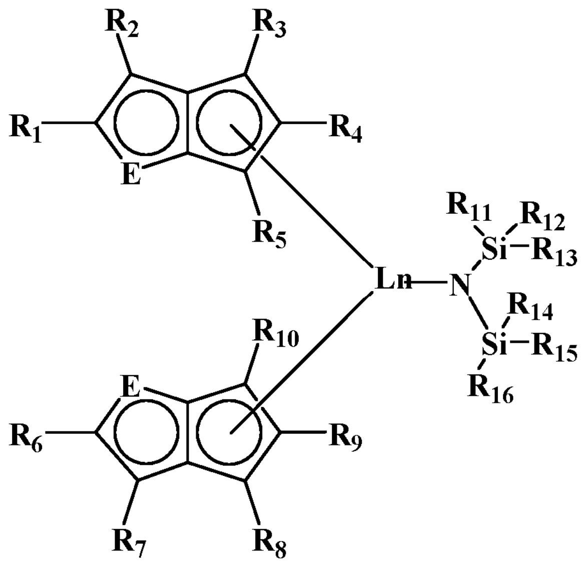

(Formula I)

wherein in the formula I, Ln is a lanthanide, scandium, or yttrium;

$R_1$, $R_2$, $R_3$, $R_4$, $R_5$, $R_6$, $R_7$, $R_8$, $R_9$, and $R_{10}$ are the same or different, and are each independently hydrogen, $C_1$-$C_{20}$ alkyl, $C_6$-$C_{30}$ aryl or -$SiR_{23}R_{24}R_{25}$, and $R_{23}$, $R_{24}$, and $R_{25}$ are the same or different, and are each independently hydrogen or $C_1$-$C_{20}$ alkyl;

$R_{11}$, $R_{12}$, $R_{13}$, $R_{14}$, $R_{15}$ and $R_{16}$ are the same or different, and are each independently hydrogen or $C_1$-$C_5$ alkyl;

E is O, S, or N-$R_{17}$, and $R_{17}$ is $C_1$-$C_5$ alkyl or $C_6$-$C_{12}$ aryl.

According to a second aspect of the present invention, the present invention provides a method for preparing the metallocene complex according to the first aspect of the present invention, comprising the steps of:

Step 1, contacting a precursor compound with a heterocyclic compound in the presence of organolithium, wherein the heterocyclic compound is selected from a group consisting of compounds represented by a formula 2-2-1 and compounds represented by a formula 2-2-2, and

Step 2, contacting a mixture obtained in the step 1 with an amine represented by a formula 2-3, wherein

the precursor compound is selected from the group consisting of compounds represented by a formula 2-1,

LnX (Formula 2-1)

in the formula 2-1, Ln is a lanthanide, scandium, or yttrium,

X is a halogen atom, preferably chlorine;

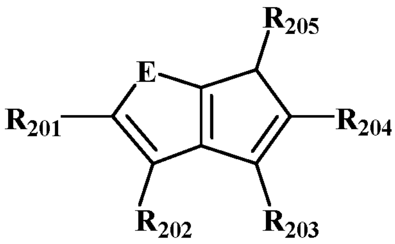

(Formula 2-2-1)

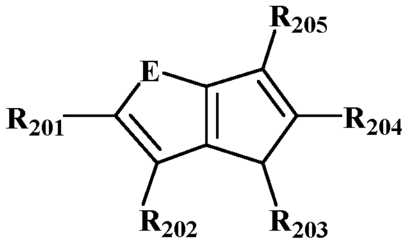

(Formula 2-2-2)

in the formula 2-2-1 and formula 2-2-2, $R_{201}$, $R_{202}$, $R_{203}$, $R_{204}$, and $R_{205}$ are the same or different, and are each independently hydrogen, $C_1$-$C_{20}$ alkyl, $C_6$-$C_{30}$ aryl or -$SiR_{23}R_{24}R_{25}$, and $R_{23}$, $R_{24}$, and $R_{25}$ are the same or different, and are each independently hydrogen or $C_1$-$C_{20}$ alkyl;

in the formula 2-2-1 and formula 2-2-2, E is O, S, or N-$R_{17}$, and $R_{17}$ is $C_1$-$C_5$ alkyl or $C_6$-$C_{12}$ aryl;

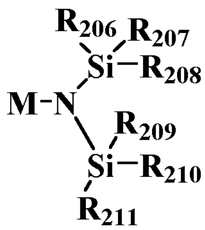

(Formula 2-3)

in the formula 2-3, $R_{206}$, $R_{207}$, $R_{208}$, $R_{209}$, $R_{210}$, and $R_{211}$ are the same or different, and are each independently hydrogen or $C_1$-$C_5$ alkyl,

M is an alkali metal atom, preferably potassium or sodium.

According to a third aspect of the present invention, the present invention provides a catalyst composition, including a metallocene complex and a cocatalyst, the metallocene complex being the metallocene complex according to the first aspect of the present invention.

According to a fourth aspect of the present invention, the present invention provides an olefin polymerization method, comprising contacting at least one olefin with components in a catalyst composition under olefin polymerization conditions, the catalyst composition being the catalyst composition according to the second aspect of the present invention.

According to a fifth aspect of the present disclosure, the present disclosure provides an olefin polymer prepared by the method according to the fourth aspect of the present invention.

The catalyst composition containing the metallocene complex according to the present invention exhibits an improved catalytic activity while also having a relatively high structural regularity control capability for the conjugated diene structural unit and a relatively high capability for copolymerizing ethylene and conjugated dienes. The catalyst composition comprising the metallocene complex according to the present invention can precisely control the structure of the conjugated diene structural unit, thereby improving the structural regularity of the conjugated diene structural unit in the prepared polymer. The catalyst system comprising the metallocene complex according to the present invention has good copolymerization properties, and can efficiently achieve the copolymerization of ethylene and conjugated dienes, and effectively control the copolymerization composition of the copolymer. The method for preparing the metallocene complex according to the present invention prepares the metallocene complex by a "one-pot method", effectively simplifying the synthetic route, and reducing the operational complexity and the operational cost.

## Detailed Description of the Embodiments

The endpoints and any values of the ranges disclosed herein are not limited to the precise range or value, and these ranges or values should be understood as including values close to these ranges or values. For numerical ranges, the endpoint values of each range, the endpoint values of each range and individual point values, and individual point values may be combined with each other to obtain one or more new numerical ranges, and these numerical ranges should be considered to be specifically disclosed herein.

According to a first aspect of the present invention, the present invention provides a metallocene complex, having a structure shown in a formula I,

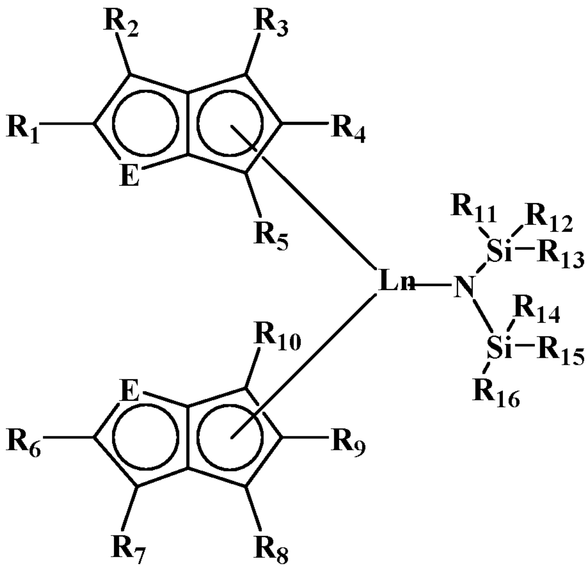

(Formula I).

In the formula I, Ln is a lanthanide, scandium, or yttrium.

In the present invention, the term "lanthanide" refers to a collective name of 15 elements from lanthanum, element 57, to lutetium, element 71, in the periodic table of elements.

In the formula I, specific examples of Ln can include, but are not limited to, scandium (Sc), yttrium (Y), lanthanum (La), cerium (Ce), praseodymium (Pr), neodymium (Nd), promethium (Pm), samarium (Sm), europium (Eu), gadolinium (Gd), terbium (Tb), dysprosium (Dy), holmium (Ho), erbium (Er), thulium (Tm), ytterbium (Yb), or lutetium (Lu).

Preferably, in the formula I, Ln is gadolinium or scandium. More preferably, in the formula I, Ln is gadolinium.

In the formula I, $R_1$, $R_2$, $R_3$, $R_4$, $R_5$, $R_6$, $R_7$, $R_8$, $R_9$, and $R_{10}$ are the same or different, and are each independently hydrogen, $C_1$-$C_{20}$ alkyl, $C_6$-$C_{30}$ aryl or $-SiR_{23}R_{24}R_{25}$, and $R_{23}$, $R_{24}$, and $R_{25}$ are the same or different, and are each independently hydrogen or $C_1$-$C_{20}$ alkyl; and preferably, at least one of $R_{23}$, $R_{24}$, and $R_{25}$ is $C_1$-$C_{20}$ alkyl.

In the present invention, the $C_1$-$C_{20}$ alkyl includes $C_1$-$C_{20}$ linear alkyl, $C_3$-$C_{20}$ branched alkyl, and $C_3$-$C_{20}$ cycloalkyl, and specific examples of the $C_1$-$C_{20}$ alkyl may include, but are not limited to: methyl, ethyl, *n*-propyl, isopropyl, *n*-butyl, *sec*-butyl, isobutyl, *tert*-butyl, pentyl and its various isomers, hexyl and its various isomers, heptyl and its various isomers, octyl and its various isomers, nonyl and its various isomers, decyl and its various isomers, undecyl and its various isomers, dodecyl and its various isomers, tridecyl and its various isomers, tetradecyl and its various isomers, pentadecyl and its various isomers, hexadecyl and its various isomers, heptadecyl and its various isomers, octadecyl and its various isomers, nonadecyl and its various isomers, eicosyl and its various isomers, cyclopropyl, cyclobutyl, cyclopentyl and cyclohexyl.

In the present invention, specific examples of the $C_6$-$C_{30}$ aryl may include, but are not limited to, phenyl, tolyl, ethylphenyl, propylphenyl (wherein propyl may be *n*-propyl or isopropyl), butylphenyl (wherein butyl may be *n*-butyl, *sec*-butyl, isobutyl or *tert*-butyl), naphthyl, anthryl or phenanthryl.

In a preferred embodiment, in the formula I, $R_1$ and $R_6$ are each independently $C_1$-$C_5$ alkyl, $R_2$, $R_4$, $R_7$ and $R_9$ are each independently $C_6$-$C_{12}$ aryl, and $R_3$, $R_5$, $R_8$ and $R_{10}$ are all hydrogen. In this preferred embodiment, $R_1$ and $R_6$ are preferably methyl and $R_2$, $R_4$, $R_7$ and $R_9$ are preferably phenyl. In this preferred embodiment, Ln is preferably gadolinium.

In another preferred embodiment, in the formula I, $R_1$, $R_4$, $R_6$ and $R_9$ are each independently $C_1$-$C_{20}$ alkyl, $R_2$ and $R_7$ are each independently $C_6$-$C_{30}$ aryl, and $R_3$, $R_5$, $R_8$ and $R_{10}$ are all hydrogen. In this preferred embodiment, $R_1$, $R_4$, $R_6$ and $R_9$ are each independently preferably $C_1$-$C_5$ alkyl, and $R_2$ and $R_7$ are each independently preferably $C_6$-$C_{12}$ aryl. More preferably, $R_1$, $R_4$, $R_6$ and $R_9$ are methyl or isopropyl and $R_2$ and $R_7$ are phenyl. Further preferably, $R_1$ and $R_6$ are methyl, $R_4$ and $R_9$ are methyl or isopropyl, and $R_2$ and $R_7$ are phenyl. In this preferred embodiment, Ln is preferably gadolinium. In yet another preferred embodiment, in the formula I, $R_1$, $R_4$, $R_6$ and $R_9$ are each independently $C_1$-$C_{20}$ alkyl, $R_2$ and $R_7$ are each independently $C_6$-$C_{30}$ aryl, $R_5$ and $R_{10}$ are both hydrogen, $R_3$ and $R_8$ are each independently $-SiR_{23}R_{24}R_{25}$, and $R_{23}$, $R_{24}$ and $R_{25}$ are the same or different, and are each independently $C_1$-$C_{20}$ alkyl. In this preferred embodiment, $R_1$, $R_4$, $R_6$ and $R_9$ are each independently preferably $C_1$-$C_5$ alkyl, $R_2$ and $R_7$ are each independently preferably $C_6$-$C_{12}$ aryl, $R_3$ and $R_8$ are each independently preferably $-SiR_{23}R_{24}R_{25}$, $R_{23}$, $R_{24}$ and $R_{25}$ are the same or different, and are each independently hydrogen or $C_1$-$C_5$ alkyl, and at least one of $R_{23}$, $R_{24}$ and $R_{25}$ is $C_1$-$C_5$ alkyl. In this preferred embodiment, $R_1$, $R_4$, $R_6$ and $R_9$ are more preferably methyl, $R_2$ and $R_7$ are more preferably phenyl, $R_3$ and $R_8$ are each independently more preferably $-SiR_{23}R_{24}R_{25}$, and $R_{23}$, $R_{24}$ and $R_{25}$ are all methyl. In this preferred embodiment, Ln is preferably gadolinium.

In the formula I, $R_{11}$, $R_{12}$, $R_{13}$, $R_{14}$, $R_{15}$ and $R_{16}$ are the same or different, and are each independently hydrogen or

$C_1$-$C_5$ alkyl. Preferably, in the formula I, $R_{11}$, $R_{12}$, $R_{13}$, $R_{14}$, $R_{15}$ and $R_{16}$ are the same or different, and are each independently hydrogen or $C_1$-$C_5$ alkyl, and at least one of $R_{11}$, $R_{12}$ and $R_{13}$ is $C_1$-$C_5$ alkyl, and at least one of $R_{14}$, $R_{15}$ and $R_{16}$ is $C_1$-$C_5$ alkyl. More preferably, in the formula I, $R_{11}$, $R_{12}$, $R_{13}$, $R_{14}$, $R_{15}$ and $R_{16}$ are the same or different, and are each independently hydrogen or $C_1$-$C_5$ alkyl, and at least two of $R_{11}$, $R_{12}$ and $R_{13}$ are $C_1$-$C_5$ alkyl, and at least two of $R_{14}$, $R_{15}$ and $R_{16}$ are $C_1$-$C_5$ alkyl. Further preferably, in the formula I, $R_{11}$, $R_{12}$, $R_{13}$, $R_{14}$, $R_{15}$ and $R_{16}$ are the same or different, and are each independently $C_1$-$C_5$ alkyl. Still further preferably, in the formula I, $R_{11}$, $R_{12}$, $R_{13}$, $R_{14}$, $R_{15}$ and $R_{16}$ are all methyl.

In the formula I, E is O, S, or N-$R_{17}$, and $R_{17}$ is $C_1$-$C_5$ alkyl or $C_6$-$C_{12}$ aryl. Preferably, in the formula I, E is S.

According to the metallocene complex of the present invention, the metallocene complex is preferably a complex shown in a formula II, a formula III, a formula IV or a formula V,

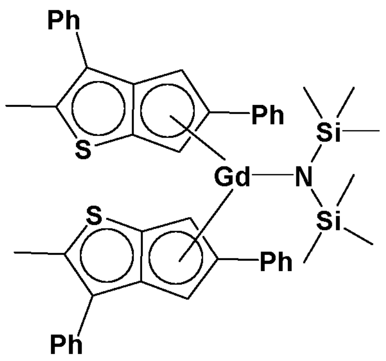

(Formula II)

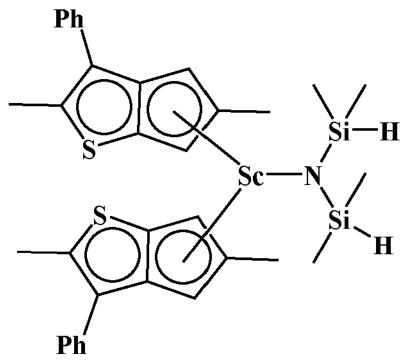

(Formula III)

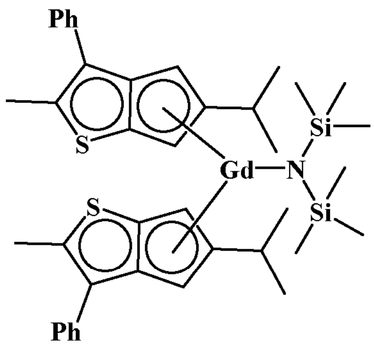

(Formula IV)

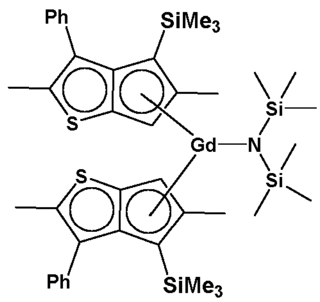

(Formula V).

According to the metallocene complex of the present invention, the metallocene complex is particularly preferably the complex shown in the formula II, the formula IV or the formula V.

According to a second aspect of the present invention, the present invention provides a method for preparing the metallocene complex according to the first aspect of the present invention, comprising the steps of:

Step 1, contacting a precursor compound with a heterocyclic compound in the presence of organolithium, wherein the heterocyclic compound is selected from the group consisting of compounds represented by a formula 2-2-1 and compounds represented by a formula 2-2-2, and

Step 2, contacting a mixture obtained in the step 1 with an amine represented by a formula 2-3, wherein

the precursor compound is selected from the group consisting of compounds represented by a formula 2-1,

LnX (Formula 2-1)

in the formula 2-1, Ln is a lanthanide, scandium, or yttrium, preferably gadolinium or scandium, more preferably gadolinium;

X is a halogen atom which may be, for example, fluorine, chlorine, bromine or iodine, preferably chlorine;

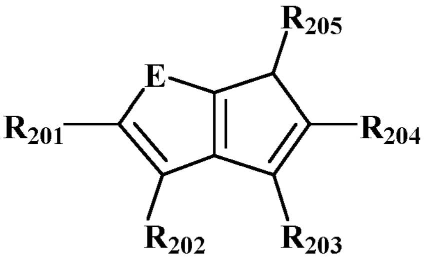

(Formula 2-2-1)

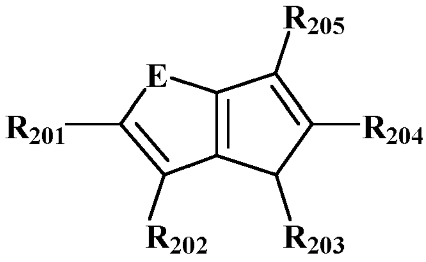

(Formula 2-2-2)

in the formula 2-2-1 and formula 2-2-2, $R_{201}$, $R_{202}$, $R_{203}$, $R_{204}$, and $R_{205}$ are the same or different, and are each independently hydrogen, $C_1$-$C_{20}$ alkyl, $C_6$-$C_{30}$ aryl or $-SiR_{23}R_{24}R_{25}$, and $R_{23}$, $R_{24}$, and $R_{25}$ are the same or different, and are each independently hydrogen or $C_1$-$C_{20}$ alkyl;
in the formula 2-2-1 and formula 2-2-2, E is O, S, or N-$R_{17}$, and $R_{17}$ is $C_1$-$C_5$ alkyl or $C_6$-$C_{12}$ aryl, preferably S;

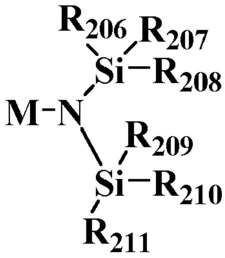

(Formula 2-3)

in the formula 2-3, $R_{206}$, $R_{207}$, $R_{208}$, $R_{209}$, $R_{210}$, and $R_{211}$ are the same or different, and are each independently hydrogen or $C_1$-$C_5$ alkyl,
M is an alkali metal atom, and may be, for example, lithium, sodium or potassium, preferably sodium or potassium, more preferably potassium.

According to the preparation method of the present invention, the mixture obtained in the step 1 is directly used as a raw material in the step 2 without separation to be in contact with the amine for a reaction. Separation of the mixture obtained in the step 1 is omitted. Separation not only increases the complexity and cost of operation, but also adversely affects the yield of a target product due to the loss of materials in the separation process. According to the preparation method of the present invention, the mixture obtained in the step 1 is directly used in the step 2 without separation, not only simplifying the operation, reducing the cost, but also not adversely affecting the yield of the target product.
According to the preparation method of the present invention, in the formula 2-2-1 and the formula 2-2-2, $R_{201}$, $R_{202}$, $R_{203}$, $R_{204}$, and $R_{205}$ correspond to $R_1$, $R_2$, $R_3$, $R_4$, $R_5$, $R_6$, $R_7$, $R_8$, $R_9$, and $R_{10}$ in the compound shown in the formula I, and specific examples thereof are given so that the compound shown in the formula I can be obtained, which will not be described in detail here.
According to the preparation method of the present invention, in the formula 2-3, $R_{206}$, $R_{207}$, $R_{208}$, $R_{209}$, $R_{210}$, and $R_{211}$ correspond to $R_{11}$, $R_{12}$, $R_{13}$, $R_{14}$, $R_{15}$ and $R_{16}$ in the compound shown in the formula I, and specific examples thereof are given so that the compound shown in the formula I can be obtained, which will not be described in detail here.
According to the preparation method of the present invention, in the step 1, the precursor compound is contacted with the heterocyclic compound in the presence of the organolithium, the organolithium being preferably an organomonolithium compound, more preferably a compound shown in a formula VIII,

$R_{26}Li$ (Formula VIII)

in the formula VIII, $R_{26}$ is $C_1$-$C_{10}$ alkyl, such as methyl, ethyl, *n*-propyl, isopropyl, *n*-butyl, *sec*-butyl, isobutyl, *tert*-butyl, *n*-pentyl, isopentyl, *tert*-pentyl, neopentyl, hexyl (including various isomers of hexyl), heptyl (including various isomers of heptyl), octyl (including various isomers of octyl), nonyl (including various isomers of nonyl), or decyl (including various isomers of decyl).
Specific examples of the organolithium may include, but are not limited to, one or two or more of ethyllithium, *n*-propyllithium, isopropyllithium, *n*-butyllithium, *sec*-butyllithium, *tert*-butyllithium, and isobutyllithium.
Preferably, the organolithium is one or two or more selected from the group consisting of *n*-butyllithium, *sec*-butyllithium, isobutyllithium and *tert*-butyllithium. More preferably, the organolithium is n-butyllithium.

In the step 1, contacting the precursor compound with the heterocyclic compound may be performed at a temperature of 0-65°C and a duration of the contacting may be 1-120 h, preferably 1.2-80 h, more preferably 1.5-40 h, further preferably 2-10 h. In the step 1, the precursor compound is contacted with a lithium salt of the heterocyclic compound in a first solvent, the first solvent being preferably one or two or more of tetrahydrofuran, diethyl ether, dioxane, and hexane. The precursor compound and the heterocyclic compound may be separately mixed with a portion of the first solvent to form solutions, and the solution containing the precursor compound may be mixed with the solution containing the heterocyclic compound, thereby contacting the precursor compound with the lithium salt of the heterocyclic compound.

In the step 1, the organolithium is preferably contacted with the heterocyclic compound to form a lithium salt and then the lithium salt is contacted with the precursor compound, the lithium salt having a structure shown in a formula 2-4.

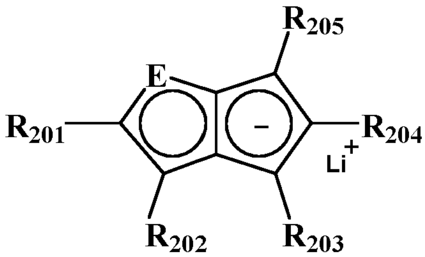
(Formula 2-4)

The heterocyclic compound may be dissolved in the first solvent to be placed in an environment of -78°C to 0°C, followed by addition of alkyl lithium for a reaction. The heterocyclic compound reacts with the alkyl lithium at a temperature of preferably -78°C to 60°C, more preferably -50°C to 50°C, further preferably -10°C to 30°C; and the reaction time is preferably 0.8-10 h, more preferably 0.8-8 h, further preferably 1-5 h.

According to the preparation method of the present invention, the mixture formed after contacting the precursor compound with the heterocyclic compound in the step 1 is directly contacted with the amine in the step 2 without separation to obtain the metallocene complex according to the present invention. According to the preparation method of the present invention, in the step 2, the mixture obtained in the step 1 is contacted with the amine, preferably in a second solvent, the second solvent being preferably one or two or more of toluene, xylene and chlorobenzene. Preferably, at least part of the first solvent is removed from the mixture obtained after the contacting in the step 1 to obtain a mixture with at least part of the first solvent removed, and the mixture with at least part of the first solvent removed is mixed with the second solvent such that the contacting in the step 2 is performed in the second solvent.

According to the preparation method of the present invention, in the step 2, the mixture obtained in the step 1 may be contacted with the amine at a temperature of 0-30°C and a duration of the contacting may be 1-48 h.

According to the preparation method of the present invention, the metallocene complex according to the present invention may be separated from a mixture obtained in the step 2 by conventional methods. In a preferred embodiment, at least part of the second solvent can be removed from the reaction mixture obtained in the step 2, a third solvent is added to the reaction mixture with at least part of the second solvent removed, followed by solid-liquid separation, a liquid-phase material is collected, a solvent is removed from the liquid-phase material, and a residual solid-phase material is the metallocene complex according to the present invention. The third solvent may be one or two or more of hexane, heptane, and toluene.

According to a third aspect of the present invention, the present invention provides a catalyst composition, comprising a metallocene complex and a cocatalyst, the metallocene complex being the metallocene complex according to the first aspect of the present invention.

According to the catalyst composition of the present invention, the cocatalyst may be a cocatalyst commonly used in the field of olefin polymerization. In a preferred embodiment, the cocatalyst is an organoaluminum compound and/or an organoboron compound.

The organoaluminum compound is preferably alumoxane and/or a compound represented by a formula V,

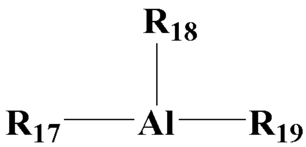
(Formula V)

in the formula V, $R_{17}$, $R_{18}$, and $R_{19}$ are the same or different, and are each independently selected from hydrogen, $C_1$-$C_{10}$ alkyl, $C_1$-$C_{10}$ alkoxy, $C_6$-$C_{20}$ aryl, $C_7$-$C_{15}$ alkaryl, $C_7$-$C_{15}$ aralkyl, and a hydrogen atom, and $R_{17}$, $R_{18}$, and $R_{19}$ are not simultaneously a hydrogen atom.

The $C_1$-$C_{10}$ alkyl includes $C_1$-$C_{10}$ linear alkyl, $C_3$-$C_{10}$ branched alkyl, and $C_3$-$C_{10}$ cycloalkyl, and specific examples of the $C_1$-$C_{10}$ alkyl may include, but are not limited to: methyl, ethyl, n-propyl, isopropyl, *n*-butyl, *sec*-butyl, isobutyl, *tert*-butyl, pentyl and its various isomers, hexyl and its various isomers, heptyl and its various isomers, octyl and its various isomers, nonyl and its various isomers, decyl and its various isomers, cyclopropyl, cyclobutyl, cyclopentyl and cyclohexyl.

Specific examples of the $C_1$-$C_{10}$ alkoxy may include, but are not limited to, methoxy, ethoxy, propoxy, and butoxy.

Specific examples of the $C_6$-$C_{20}$ aryl may include, but are not limited to, phenyl, tolyl, ethylphenyl, propylphenyl (wherein propyl may be *n*-propyl or isopropyl), butylphenyl (wherein butyl may be *n*-butyl, *sec*-butyl, isobutyl, or *tert*-butyl), naphthyl, anthryl, or phenanthryl.

The alkaryl refers to aryl with an alkyl substituent, and specific examples of the alkaryl may include, but are not limited to, tolyl, ethylphenyl, dimethylphenyl, and diethylphenyl.

The aralkyl refers to alkyl with an aryl substituent, and specific examples of the aralkyl may include, but are not limited to, benzyl, phenethyl, 1-phenylpropyl, 2-phenylpropyl, and 3-phenylpropyl. Specific examples of the organoaluminum compound may include, but are not limited to: diethylaluminum hydride, di-*n*-propylaluminum hydride, di-*n*-butylaluminum hydride, diisobutylaluminum hydride, diphenylaluminum hydride, bis(*p*-tolyl)aluminum hydride, dibenzylaluminum hydride, phenyl ethylaluminum hydride, phenyl *n*-propylaluminum hydride, *p*-tolyl ethylaluminum hydride, *p*-tolyl *n*-propylaluminum hydride, p-tolyl isopropylaluminum hydride, benzyl ethylaluminum hydride, benzyl *n*-propylaluminum hydride, benzyl isopropylaluminum hydride, ethylaluminum dihydride, butylaluminum dihydride, isobutylaluminum dihydride, octylaluminum dihydride, amylaluminum dihydride, diethylaluminum ethoxide, dipropylaluminum ethoxide, trimethylaluminum, triethylaluminum, tri-*n*-propylaluminum, triisopropylaluminum, tri-*n*-butylaluminum, triisobutylaluminum, tripentylaluminum, trihexylaluminum, tricyclohexylaluminum, trioctylaluminum, triphenylaluminum, tris(*p*-tolyl)aluminum, tribenzylaluminum, ethyldiphenylaluminum, ethylbis(*p*-tolyl)aluminum, ethylbis(benzyl)aluminum, diethylphenylaluminum, diethyl(*p*-tolyl)aluminum, and diethylbenzylaluminum.

In one preferred example, in the formula V, $R_{17}$, $R_{18}$, and $R_{19}$ are hydrogen, methyl, ethyl, *n*-propyl, isopropyl, *n*-butyl or isobutyl, and at most one of $R_{17}$, $R_{18}$, and $R_{19}$ is hydrogen. More preferably, in the formula V, $R_{17}$, $R_{18}$, and $R_{19}$ are hydrogen or butyl and at most one of $R_{17}$, $R_{18}$, and $R_{19}$ is hydrogen.

According to the catalyst composition of the present invention, the organoaluminum compound is preferably triisobutylaluminum and/or diisobutylaluminum hydride.

The organoboron compound is preferably an organoborate. The organoborate is an ionic compound consisting of a borate anion and a cation.

Specific examples of the borate anion may include, but are not limited to: tetraphenylborate, tetrakis(monofluorophenyl)borate, tetrakis(difluorophenyl)borate, tetrakis(trifluorophenyl)borate, tetrakis(tetrafluorophenyl)borate, tetrakis(pentafluorophenyl)borate, tetrakis(tetrafluoromethylphenyl)borate, tetrakis(tolyl)borate, tetrakis(xylyl)borate, (triphenyl-pentafluorophenyl)borate, [tris(pentafluorophenyl)phenyl]borate, and undecahydro-7,8-dicarboundecaborate.

Specific examples of the cation may include, but are not limited to, a carbonium cation, an oxonium cation, an ammonium cation, a phosphonium cation, a cycloheptatrienyl cation, and a ferrocenium cation containing a transition metal. The carbonium cation includes tri-substituted carbonium cations such as triphenylcarbonium cations and tri(substituted phenyl)carbonium cations. More specific examples of the tri(substituted phenyl)carbonium cations include tri(tolyl)carbonium cation. Specific examples of the ammonium cation may include, but are not limited to: trialkylammonium cations such as a trimethylammonium cation, a triethylammonium cation, a tripropylammonium cation, and a tributylammonium cation; N,N-dialkylanilinium cations such as a N,N-dimethylanilinium cation, a N,N-diethylanilinium cation, and a N,N-2,4,6-pentamethylanilinium cation; and dialkylammonium cations such as a diisopropylammonium cation and a dicyclohexylammonium cation. Specific examples of the phosphonium cation may include, but are not limited to, triaryl cations such as a triphenylphosphonium cation, a tris(tolyl)phosphonium cation, and a tris(xylyl)phosphonium cation. According to the catalyst composition of the present invention, the organoboron compound is preferably N,N-dimethylanilinium tetrakis(pentafluorophenyl)borate and/or trityl tetrakis(pentafluorophenyl)borate.

According to the catalyst composition of the present invention, the organoaluminum compound and the organoboron compound which are used as the cocatalyst may be used alone or in combination.

In a preferred embodiment, the cocatalyst is the organoaluminum compound and the organoboron compound. In this preferred embodiment, the cocatalyst is more preferably triisobutylaluminum and N,N-dimethylanilinium tetrakis(pentafluorophenyl)borate. In this preferred embodiment, a molar ratio of the organoaluminum compound to the organoboron compound in the cocatalyst may be 1:0.01-100, preferably 1:0.1-90, more preferably 1:0.5-60, the organoaluminum compound being in terms of an aluminum element and the organoboron compound being in terms of a boron element. In this preferred embodiment, the amount of the cocatalyst used can be conventionally selected. When the cocatalyst contains the organoboron compound, a molar ratio of the metallocene complex to the organoboron compound is preferably 1:0.1-10, preferably 1:0.5-5.

According to a fourth aspect of the present invention, the present invention provides an olefin polymerization method, comprising contacting at least one olefin with components in a catalyst composition under olefin polymerization

conditions, the catalyst composition being the catalyst composition according to the third aspect of the present invention.

The olefin polymerization method according to the present invention is particularly suitable as a copolymerization reaction of ethylene and a conjugated diene. According to the olefin polymerization method of the present invention, in a preferred embodiment, the olefin is a conjugated diene. In another preferred embodiment, the olefin is ethylene and a conjugated diene. The conjugated diene refers to a compound containing a conjugated double bond in a molecular structure. The conjugated diene may be one or two or more selected from the group consisting of compounds represented by a formula VI,

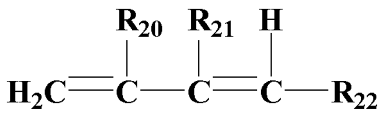
(Formula VI)

in the formula VI, $R_{20}$, $R_{21}$ and $R_{22}$ are the same or different, and are each selected from hydrogen and $C_1$-$C_5$ linear or branched alkyl.

According to the olefin polymerization method of the present invention, specific examples of the conjugated diene may include, but are not limited to, butadiene and/or isoprene. Preferably, the conjugated diene is butadiene.

According to the olefin polymerization method of the present invention, the amount of the metallocene complex used in the catalyst composition is preferably 0.1-1000 μmol relative to 1 mol of the conjugated diene.

According to the olefin polymerization method of the present invention, the contacting may be performed at a temperature of -100°C to 150°C, preferably at a temperature of 10°C-50°C. According to a fifth aspect of the present disclosure, the present disclosure provides an olefin polymer prepared by the method according to the fourth aspect of the present invention.

In a preferred embodiment, the olefin polymer contains an ethylene structural unit derived from ethylene and a conjugated diene structural unit derived from a conjugated diene. In this preferred embodiment, the ethylene structural unit may be present in an amount of 80 mol% or less, preferably 5-70 mol%, more preferably 10-60 mol%, based on the total amount of the olefin polymer. In this preferred embodiment, the content of a cis-1,4-structural unit in the structural unit derived from the conjugated diene is preferably 85 mol% or more, more preferably 90 mol% or more, further preferably 95 mol% or more, still further preferably 98 mol% or more. In this preferred embodiment, the conjugated diene is preferably butadiene. In the present invention, a cis-structural unit refers to a structural unit with a cis configuration in the conjugated diene structural unit, and the cis-1,4-structural unit refers to a structural unit in which a conjugated diene is formed by 1,4-polymerization and has a cis configuration.

The present invention is described below in detail with reference to examples, but the scope of the present invention is defined by the claims.

In the following Examples and Comparative Examples, the molecular weight and molecular weight distribution index ($M_w/M_n$) of the polymers were determined by using a 1260 Infinity II high-temperature gel permeation chromatograph manufactured by Agilent using chromatographic columns of two MIXD-B columns (300×7.5 mm) and one Guard column (50×7.5 mm). A mobile phase is trichlorobenzene and a flow rate is 1 mL/min; the sample solution concentration is 1 mg/mL and an injection volume is 200 μL; the test temperature is 150°C; and monodisperse polystyrene is used as a standard sample.

In the following Examples and Comparative Examples, nuclear magnetic resonance spectroscopy was performed by using a 400 MHz nuclear magnetic resonance spectrometer commercially available from Bruker Corporation, polybutadiene was tested at room temperature by using deuterated chloroform as a solvent and tetramethylsilane (TMS) as an internal standard, and an ethylene-butadiene copolymer was tested at a temperature of 100°C by using deuterated tetrachloroethane as a solvent. The content of a *cis*-1,4 structural unit in a butadiene structural unit is calculated from a $^{13}C$ NMR spectrum of the polymer, peaks at 26.5-27.5 ppm correspond to carbon atoms in the *cis*-1,4 structural unit, and peaks at 26.5-27.5 ppm and 31.5-32.5 ppm correspond to carbon atoms in the butadiene structural unit; the content of an ethylene structural unit in the copolymer is calculated from a $^{13}C$ NMR spectrum, and peaks at 28.5-30.0 ppm correspond to carbon atoms in the ethylene structural unit, and peaks at 26.5-27.5 ppm and 31.5-32.5 ppm correspond to carbon atoms in the butadiene structural unit. Wherein a *cis*-structural unit refers to a structural unit with a cis configuration and the *cis*-1,4-structural unit refers to a structural unit in which butadiene is formed by 1,4-polymerization and has a cis configuration.

In the following Examples and Comparative Examples, a calculation formula for monomer conversion is:

$$\text{Monomer conversion (\%)} = \text{mass of a polymer obtained/mass of monomers added} \times 100\%.$$

Preparation Examples 1-4 were used to prepare the metallocene complex according to the present invention.

Preparation Example 1

Synthesis of bis(2-methyl-3,5-diphenyl-6-hydro-cyclopentadienothiophene)gadolinium bis(trimethylsilylamide) (a complex shown in a formula II)

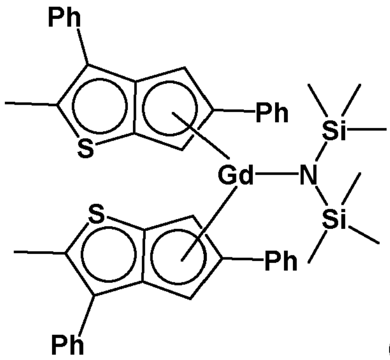

(Formula II)

To a 40 mL solution of $GdCl_3$ (0.791 g, 3 mmol) in THF was slowly added dropwise a 20 mL solution of a lithium salt (1.819 g, 6.2 mmol) synthesized from 2-methyl-3,5-diphenyl-6-hydro-cyclopentadienothiophene and n-butyllithium in tetrahydrofuran (THF) under a nitrogen atmosphere. Then, the mixture was stirred at a temperature of 65°C for 6 h. Thereafter, under reduced pressure, THF was distilled off and 50 mL of toluene was added. Then, 20 mL of a toluene solution of $KN(SiMe_3)_2$ (0.519 g, 2.6 mmol) was slowly added dropwise to the mixture, followed by stirring at room temperature (25°C) for 12 h. Then, toluene was distilled off under reduced pressure, 100 mL of hexane was added, and a precipitate was removed by filtration. Thereafter, hexane was distilled off under reduced pressure to give a pale yellow solid target product (1.336 g, yield: 50%). The product was analyzed by elemental analysis and the obtained elemental analysis result was as follows: C 61.91; H 5.42.

Preparation Example 2

Synthesis of bis(2,5-dimethyl-3-phenyl-6-hydro-cyclopentadienothiophene)scandium bis(dimethylsilylamide) (a complex shown in a formula III)

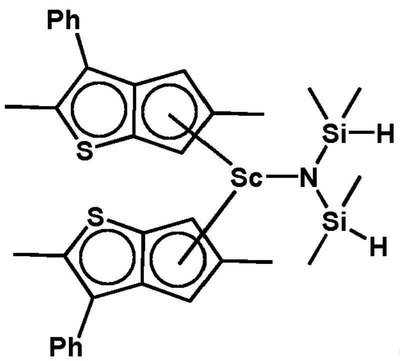

(Formula III)

A metallocene complex was prepared by the same method as that in Preparation example 1 except that $GdCl_3$ in Preparation example 1 was replaced by $ScCl_3$, 2-methyl-3,5-diphenyl-6-hydro-cyclopentadienothiophene in Preparation example 1 was replaced by 2,5-dimethyl-3-phenyl-6-hydro-cyclopentadienothiophene, and $KN(SiMe_3)_2$ in Preparation example 1 was replaced by $KN(SiMe_2H)_2$ to give a pale yellow solid target product (1.183 g, yield: 63%). The product was analyzed by elemental analysis and the obtained elemental analysis result was as follows: C 65.91; H 6.76.

Preparation Example 3

Synthesis of bis(2-methyl-3-phenyl-5-isopropyl-6-hydro-cyclopentadienothiophene)gadolinium bis(trimethylsilylamide) (a complex shown in a formula IV)

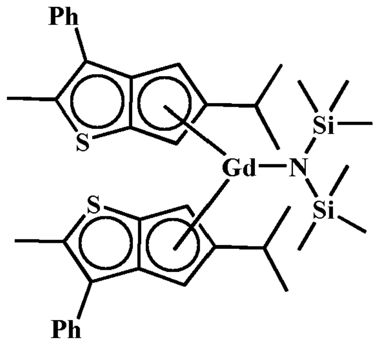

(Formula IV)

A metallocene complex was prepared by the same method as that in Preparation example 1 except that 2-methyl-3,5-diphenyl-6-hydro-cyclopentadienothiophene in Preparation example 1 was replaced by 2-methyl-3-phenyl-5-isopropyl-6-hydro-cyclopentadienothiophene to give a white solid target product (1.357 g, yield: 55%). The product was analyzed by elemental analysis and the obtained elemental analysis result was as follows: C 58.28; H 6.36.

Preparation Example 4

Synthesis of bis(2,5-dimethyl-3-phenyl-4-trimethylsilyl-6-hydro-cyclopentadienothiophene)gadolinium bis(trimethylsilylamide) (a complex shown in a formula V)

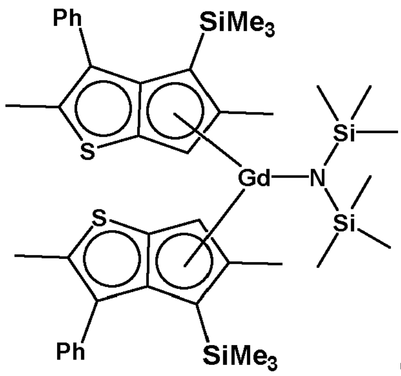

(Formula V)

A metallocene complex was prepared by the same method as that in Preparation example 1 except that 2-methyl-3,5-diphenyl-6-hydro-cyclopentadienothiophene in Preparation example 1 was replaced by 2,5-dimethyl-3-phenyl-4-trimethylsilyl-6-hydro-cyclopentadienothiophene to give a white solid target product (1.232 g, yield: 45%). The product was analyzed by elemental analysis and the obtained elemental analysis result was as follows: C 55.27; H 6.63.

Comparative Preparation Example 1

A complex VI was synthesized according to the method described in the literature, Dalton Trans., 2008, 2531-2533.

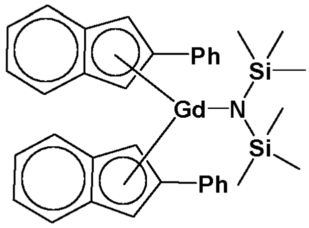

(Formula VI)

Comparative Preparation Example 2

A complex VII was synthesized according to the method described in the literature, Angew. Chem. Int. Ed., 2017 (56), 6975-6979.

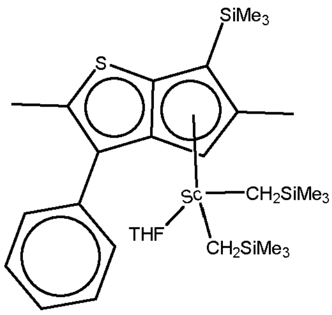

(Formula VII)

Examples 1-10 serve to illustrate the catalyst composition, the olefin polymerization method, and the olefin polymer according to the present invention.

Example 1

In a glovebox under the protection of an argon atmosphere, 4.46 mg of the complex shown in the formula II and 4.00 mg of N,N-dimethylanilinium tetrakis(pentafluorophenyl)borate were dissolved in 3.6 mL of toluene in a glass vial, and 0.1 mL of a 1M solution of triisobutylaluminum in hexane was added. After sufficient dissolution, 3.5 mL of a toluene solution of butadiene (containing 0.54 g of butadiene) was added. Polymerization was performed at room temperature (25°C) for 1 h. After completion of the polymerization, a small amount of methanol containing hydrochloric acid was added to terminate the reaction. The obtained product was poured into a large amount of ethanol, and a polymer was separated out and washed with ethanol. The washed polymer was dried in a vacuum oven until the weight was no longer reduced, thus obtaining polybutadiene. The monomer conversion is determined to be 100% by calculation, and it is determined that the polymer has a number average molecular weight ($M_n$) of 112000 and a molecular weight distribution index ($M_w/M_n$) of 1.2 by gel permeation chromatography (GPC). It is determined that the molar content of a cis-1,4-structural unit in the obtained polybutadiene is greater than 99% by the nuclear magnetic resonance spectroscopy.

Example 2

In a glovebox under the protection of an argon atmosphere, 30.34 mg of the complex shown in the formula II and 27.24 mg of N,N-dimethylanilinium tetrakis(pentafluorophenyl)borate were dissolved in 8 mL of toluene in a glass vial to obtain a catalyst solution. 2 mL of a 1M solution of triisobutylaluminum in hexane and 7 mL of toluene were added into another glass vial to obtain a triisobutylaluminum solution. 120 g of toluene, the triisobutylaluminum solution, and 14 g of butadiene were sequentially added into a 500 mL autoclave. Then 0.8 MPa of ethylene was introduced, and after saturation, the catalyst solution was added. Polymerization was performed at 40°C for 60 min. After completion of the polymerization, the obtained product was poured into a large amount of ethanol with hydrochloric acid added (0.2‰ by weight, hydrochloric acid being in terms of HCl), and precipitated, and a copolymer was separated out by filtration and washed with ethanol. The washed copolymer was dried in a vacuum oven until the weight was no longer reduced, thus obtaining 14.6 g of a copolymer. It is determined that the copolymer has a number average molecular weight ($M_n$) of 105000 and a molecular weight distribution index ($M_w/M_n$) of 1.6 by gel permeation chromatography (GPC). By the nuclear magnetic resonance spectroscopy, it is determined that the molar content of a butadiene structural unit derived from butadiene in the copolymer is 86.2%; and the molar content of a cis-1,4-structural unit is 95.2% based on the total amount

of the butadiene structural unit.

Example 3

In a glovebox under the protection of an argon atmosphere, 28.03 mg of the complex shown in the formula III and 31.36 mg of trityl tetrakis(pentafluorophenyl)borate were dissolved in 8 mL of toluene in a glass vial to obtain a catalyst solution. 2 mL of a 1M solution of triisobutylaluminum in hexane and 7 mL of toluene were added into another glass vial to obtain a triisobutylaluminum solution. 120 g of toluene, the triisobutylaluminum solution, and 14 g of butadiene were sequentially added into a 500 mL autoclave. Then 0.8 MPa of ethylene was introduced, and after saturation, the catalyst solution was added. Polymerization was performed at room temperature (25°C) for 180 min. After completion of the polymerization, the obtained product was poured into a large amount of ethanol with hydrochloric acid added (0.2‰ by weight, hydrochloric acid being in terms of HCl), and precipitated, and a copolymer was separated out by filtration and washed with ethanol. The washed copolymer was dried in a vacuum oven until the weight was no longer reduced, thus obtaining 13.2 g of a copolymer. It is determined that the copolymer has a number average molecular weight ($M_n$) of 131000 and a molecular weight distribution index ($M_w/M_n$) of 3.7 by gel permeation chromatography (GPC). By the nuclear magnetic resonance spectroscopy, it is determined that the molar content of a butadiene structural unit derived from butadiene in the copolymer is 65.2%; and the molar content of a cis-1,4-structural unit is 90.5% based on the total amount of the butadiene structural unit.

Example 4

In a glovebox under the protection of an argon atmosphere, 4.12 mg of the complex shown in the formula IV and 4.00 mg of N,N-dimethylanilinium tetrakis(pentafluorophenyl)borate were dissolved in 3.6 mL of toluene in a glass vial, and 0.1 mL of a 1M solution of triisobutylaluminum in hexane was added. After sufficient dissolution, 3.5 mL of a toluene solution of butadiene (containing 0.54 g of butadiene) was added. Polymerization was performed at room temperature (25°C) for 2 h. After completion of the polymerization, a small amount of methanol containing hydrochloric acid (0.2‰ by weight, hydrochloric acid being in terms of HCl) was added to terminate the reaction. The obtained product was poured into a large amount of ethanol, and a polymer was separated out and washed with ethanol. The washed polymer was dried in a vacuum oven until the weight was no longer reduced, thus obtaining polybutadiene. The monomer conversion is determined to be 100% by calculation, and it is determined that the polymer has a number average molecular weight ($M_n$) of 101000 and a molecular weight distribution index ($M_w/M_n$) of 1.4 by gel permeation chromatography (GPC). It is determined that the molar content of a *cis*-1,4-structural unit in the obtained polybutadiene is greater than 99% by the nuclear magnetic resonance spectroscopy.

Example 5

In a glovebox under the protection of an argon atmosphere, 31.03 mg of the complex shown in the formula V and 27.24 mg of N,N-dimethylanilinium tetrakis(pentafluorophenyl)borate were dissolved in 8 mL of toluene in a glass vial to obtain a catalyst solution. 2 mL of a 1M solution of diisobutylaluminum hydride in hexane and 7 mL of toluene were added into another glass vial to obtain a diisobutylaluminum hydride solution. 120 g of toluene, the diisobutylaluminum hydride solution, and 14 g of butadiene were sequentially added into a 500 mL autoclave. Then 0.8 MPa of ethylene was introduced, and after saturation, the catalyst solution was added. Polymerization was performed at room temperature (25°C) for 180 min. After completion of the polymerization, the obtained product was poured into a large amount of ethanol with hydrochloric acid added (0.2‰ by weight, hydrochloric acid being in terms of HCl), and precipitated, and a copolymer was separated out by filtration and washed with ethanol. The washed copolymer was dried in a vacuum oven until the weight was no longer reduced, thus obtaining 12.1 g of a copolymer. It is determined that the copolymer has a number average molecular weight ($M_n$) of 288000 and a molecular weight distribution index ($M_w/M_n$) of 2.4 by gel permeation chromatography (GPC). By the nuclear magnetic resonance spectroscopy, it is determined that the molar content of a butadiene structural unit derived from butadiene in the copolymer is 78.3%; and the molar content of a cis-1,4-structural unit is greater than 99% based on the total amount of the butadiene structural unit.

Example 6

In a glovebox under the protection of an argon atmosphere, 28.03 mg of the complex shown in the formula III and 27.24 mg of N,N-dimethylanilinium tetrakis(pentafluorophenyl)borate were dissolved in 8 mL of toluene in a glass vial to obtain a catalyst solution. 2 mL of a 1M solution of triisobutylaluminum in hexane and 7 mL of toluene were added into another glass vial to obtain a triisobutylaluminum solution. 120 g of toluene, the triisobutylaluminum solution and 14 g of butadiene were sequentially added into a 500 mL autoclave. Then 1.2 MPa of ethylene was introduced, and after

saturation, the catalyst solution was added. Polymerization was performed at 40°C for 60 min. After completion of the polymerization, the obtained product was poured into a large amount of ethanol with hydrochloric acid added (0.2‰ by weight, hydrochloric acid being in terms of HCl), and precipitated, and a copolymer was separated out by filtration and washed with ethanol. The washed copolymer was dried in a vacuum oven until the weight was no longer reduced, thus obtaining 6.5 g of a copolymer. It is determined that the copolymer has a number average molecular weight ($M_n$) of 123000 and a molecular weight distribution index ($M_w/M_n$) of 3.1 by gel permeation chromatography (GPC). By the nuclear magnetic resonance spectroscopy, it is determined that the molar content of a butadiene structural unit derived from butadiene in the copolymer is 48.4%; and the molar content of a *cis*-1,4-structural unit is 90.2% based on the total amount of the butadiene structural unit.

Example 7

In a glovebox under the protection of an argon atmosphere, 30.34 mg of the complex shown in the formula II and 27.24 mg of N,N-dimethylanilinium tetrakis(pentafluorophenyl)borate were dissolved in 8 mL of toluene in a glass vial to obtain a catalyst solution. 2 mL of a 1M solution of triisobutylaluminum in hexane and 7 mL of toluene were added into another glass vial to obtain a triisobutylaluminum solution. 120 g of toluene, the triisobutylaluminum solution, and 14 g of butadiene were sequentially added into a 500 mL autoclave. Then 0.8 MPa of ethylene was introduced, and after saturation, the catalyst solution was added. Polymerization was performed at room temperature (25°C) for 180 min. After completion of the polymerization, the obtained product was poured into a large amount of ethanol with hydrochloric acid added (0.2‰ by weight, hydrochloric acid being in terms of HCl), and precipitated, and a copolymer was separated out by filtration and washed with ethanol. The washed copolymer was dried in a vacuum oven until the weight was no longer reduced, thus obtaining 5.14 g of a copolymer. It is determined that the copolymer has a number average molecular weight ($M_n$) of 83000 and a molecular weight distribution index ($M_w/M_n$) of 2.7 by gel permeation chromatography (GPC). By the nuclear magnetic resonance spectroscopy, it is determined that the molar content of a butadiene structural unit derived from butadiene in the copolymer is 85.6%; and the molar content of a *cis*-1,4-structural unit is 98.5% based on the total amount of the butadiene structural unit.

Comparative Example 1

The same method as that in Example 2 was used, except that the metallocene complex VI prepared in Comparative Preparation Example 1 was used instead of the complex shown in the formula II, thus obtaining 13.8 g of a copolymer. It is determined that the copolymer has a number average molecular weight ($M_n$) of 96000 and a molecular weight distribution index ($M_w/M_n$) of 1.7 by gel permeation chromatography (GPC). By the nuclear magnetic resonance spectroscopy, it is determined that the molar content of a butadiene structural unit derived from butadiene in the copolymer is 82%; and the molar content of a *cis*-1,4-structural unit is 91.3% based on the total amount of the butadiene structural unit.

Example 8

In a glovebox under the protection of an argon atmosphere, 22.24 mg of the complex shown in the formula III and 27.24 mg of N,N-dimethylanilinium tetrakis(pentafluorophenyl)borate were dissolved in 8 mL of toluene in a glass vial to obtain a catalyst solution. 2 mL of a 1M solution of triisobutylaluminum in hexane and 7 mL of toluene were added into another glass vial to obtain a triisobutylaluminum solution. 120 g of toluene, the triisobutylaluminum solution, and 14 g of butadiene were sequentially added into a 500 mL autoclave. Then 0.8 MPa of ethylene was introduced, and after saturation, the catalyst solution was added. Polymerization was performed at 40°C for 60 min. After completion of the polymerization, the obtained product was poured into a large amount of ethanol with hydrochloric acid added (0.2‰ by weight, hydrochloric acid being in terms of HCl), and precipitated, and a copolymer was separated out by filtration and washed with ethanol. The washed copolymer was dried in a vacuum oven until the weight was no longer reduced, thus obtaining 8.70 g of a copolymer. It is determined that the copolymer has a number average molecular weight ($M_n$) of 112000 and a molecular weight distribution index ($M_w/M_n$) of 2.5 by gel permeation chromatography (GPC). By the nuclear magnetic resonance spectroscopy, it is determined that the molar content of a butadiene structural unit derived from butadiene in the copolymer is 65.3%; and the molar content of a *cis*-1,4-structural unit is 88.4% based on the total amount of the butadiene structural unit.

Comparative Example 2

In a glovebox under the protection of an argon atmosphere, 17.50 mg of the complex shown in the formula VII and 27.24 mg of N,N-dimethylanilinium tetrakis(pentafluorophenyl)borate were dissolved in 8 mL of toluene in a glass vial to obtain a catalyst solution. 2 mL of a 1M solution of triisobutylaluminum in hexane and 7 mL of toluene were added into

another glass vial to obtain a triisobutylaluminum solution. 120 g of toluene, the triisobutylaluminum solution, and 14 g of butadiene were sequentially added into a 500 mL autoclave. Then 0.8 MPa of ethylene was introduced, and after saturation, the catalyst solution was added. The polymerization was performed at 40°C for 60 min. After completion of the polymerization, the obtained product was poured into a large amount of ethanol with hydrochloric acid added (0.2‰ by weight, hydrochloric acid being in terms of HCl), and precipitated, and a copolymer was separated out by filtration and washed with ethanol. The washed copolymer was dried in a vacuum oven until the weight was no longer reduced, thus obtaining 4.81 g of a copolymer. It is determined that the copolymer has a number average molecular weight ($M_n$) of 105000 and a molecular weight distribution index ($M_w/M_n$) of 2.3 by gel permeation chromatography (GPC). By the nuclear magnetic resonance spectroscopy, it is determined that the molar content of a butadiene structural unit derived from butadiene in the copolymer is 71.5%; and the molar content of a *cis*-1,4-structural unit is 86.3% based on the total amount of the butadiene structural unit.

Example 9

In a glovebox under the protection of an argon atmosphere, 4.12 mg of the complex shown in the formula III and 4.61 mg of trityl tetrakis(pentafluorophenyl)borate were dissolved in 3.6 mL of toluene in a glass vial, and 0.1 mL of a 1M solution of triisobutylaluminum in hexane was added. After sufficient dissolution, 3.5 mL of a toluene solution of butadiene (containing 0.54 g of butadiene) was added. Polymerization was performed at room temperature (25°C) for 2 h. After completion of the polymerization, a small amount of methanol containing hydrochloric acid (0.2‰ by weight, hydrochloric acid being in terms of HCl) was added to terminate the reaction. The obtained product was poured into a large amount of ethanol, and a polymer was separated out and washed with ethanol. The washed polymer was dried in a vacuum oven until the weight was no longer reduced, thus obtaining polybutadiene. The monomer conversion is determined to be 100% by calculation, and it is determined that the polymer has a number average molecular weight ($M_n$) of 145000 and a molecular weight distribution index ($M_w/M_n$) of 1.4 by gel permeation chromatography (GPC). It is determined that the molar content of a *cis*-1,4-structural unit in the obtained polybutadiene is 91.5% by the nuclear magnetic resonance spectroscopy.

Example 10

In a glovebox under the protection of an argon atmosphere, 4.56 mg of the complex shown in the formula V and 4.00 mg of N,N-dimethylanilinium tetrakis(pentafluorophenyl)borate were dissolved in 3.6 mL of toluene in a glass vial, and 0.1 mL of a 1M solution of triisobutylaluminum in hexane was added. After sufficient dissolution, 3.5 mL of a toluene solution of butadiene (containing 0.54 g of butadiene) was added. Polymerization was performed at room temperature (25°C) for 2 h. After completion of the polymerization, a small amount of methanol containing hydrochloric acid (0.2‰ by weight, hydrochloric acid being in terms of HCl) was added to terminate the reaction. The obtained product was poured into a large amount of ethanol, and a polymer was separated out and washed with ethanol. The washed polymer was dried in a vacuum oven until the weight was no longer reduced, thus obtaining polybutadiene. The monomer conversion is determined to be 100% by calculation, and it is determined that the polymer has a number average molecular weight ($M_n$) of 125000 and a molecular weight distribution index ($M_w/M_n$) of 1.3 by gel permeation chromatography (GPC). It is determined that the molar content of a *cis*-1,4-structural unit in the obtained polybutadiene is greater than 99% as determined by the nuclear magnetic resonance spectroscopy.

Comparative Example 3

In a glovebox under the protection of an argon atmosphere, 3.50 mg of the complex shown in the formula VI and 4.00 mg of N,N-dimethylanilinium tetrakis(pentafluorophenyl)borate were dissolved in 3.6 mL of toluene in a glass vial, and 0.1 mL of a 1M solution of triisobutylaluminum in hexane was added. After sufficient dissolution, 3.5 mL of a toluene solution of butadiene (containing 0.54 g of butadiene) was added. Polymerization was performed at room temperature (25°C) for 2 h. After completion of the polymerization, a small amount of methanol containing hydrochloric acid (0.2‰ by weight, hydrochloric acid being in terms of HCl) was added to terminate the reaction. The obtained product was poured into a large amount of ethanol, and a polymer was separated out and washed with ethanol. The washed polymer was dried in a vacuum oven until the weight was no longer reduced, thus obtaining polybutadiene. The monomer conversion is 96.3%, and it is determined that the polymer has a number average molecular weight ($M_n$) of 125000 and a molecular weight distribution index ($M_w/M_n$) of 1.2 by gel permeation chromatography (GPC). It is determined that the molar content of a *cis*-1,4-structural unit in the obtained polybutadiene is greater than 99% by the nuclear magnetic resonance spectroscopy.

Comparative Example 4

In a glovebox under the protection of an argon atmosphere, 2.93 mg of the complex shown in the formula VII and

4.61 mg of trityl tetrakis(pentafluorophenyl)borate were dissolved in 3.6 mL of toluene in a glass vial, and 0.1 mL of a 1M solution of triisobutylaluminum in hexane was added. After sufficient dissolution, 3.5 mL of a toluene solution of butadiene (containing 0.54 g of butadiene) was added. Polymerization was performed at room temperature (25°C) for 2 h. After completion of the polymerization, a small amount of methanol containing hydrochloric acid (0.2‰ by weight, hydrochloric acid being in terms of HCl) was added to terminate the reaction. The obtained product was poured into a large amount of ethanol, and a polymer was separated out and washed with ethanol. The washed polymer was dried in a vacuum oven until the weight was no longer reduced, thus obtaining polybutadiene. The monomer conversion is determined to be 100% by calculation, and it is determined that the polymer has a number average molecular weight ($M_n$) of 123000 and a molecular weight distribution index ($M_w/M_n$) of 1.4 by gel permeation chromatography (GPC). It is determined that the molar content of a *cis*-1,4-structural unit in the obtained polybutadiene is 85.3% by the nuclear magnetic resonance spectroscopy.

The experimental results of Examples 1-10 confirm that the metallocene complex according to the present invention exhibits an increased catalytic activity and can achieve a high yield of polymers. The metallocene complex according to the present invention enables efficient and highly regioselective polymerization of conjugated dienes. When the metallocene complex according to the present invention is used for the copolymerization of ethylene and conjugated dienes, the copolymerization of ethylene-conjugated diene can be efficiently carried out, and the copolymerization composition of the copolymer can be effectively controlled.

By comparing Example 2 with Comparative Example 1, Example 8 with Comparative Example 2, and Example 1 with Comparative Examples 3 and 4, it can be seen that under the same conditions, the polymerization method of the present invention can prepare more copolymers, indicating that transition metal complexes used in the polymerization method of the present invention have higher catalytic activity, thereby achieving higher polymerization reaction efficiency.

## Claims

1. A metallocene complex, having a structure shown in a formula I,

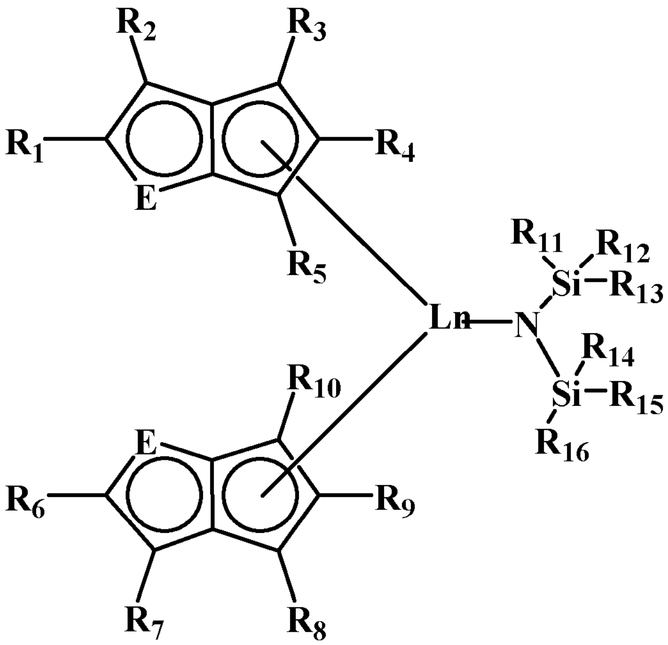

(Formula I)

Wherein in the formula I, Ln is a lanthanide, scandium, or yttrium;
$R_1$, $R_2$, $R_3$, $R_4$, $R_5$, $R_6$, $R_7$, $R_8$, $R_9$, and $R_{10}$ are the same or different, and are each independently hydrogen, $C_1$-$C_{20}$ alkyl, $C_6$-$C_{30}$ aryl or $-SiR_{23}R_{24}R_{25}$, and $R_{23}$, $R_{24}$, and $R_{25}$ are the same or different, and are each independently hydrogen or $C_1$-$C_{20}$ alkyl;
$R_{11}$, $R_{12}$, $R_{13}$, $R_{14}$, $R_{15}$ and $R_{16}$ are the same or different, and are each independently hydrogen or $C_1$-$C_5$ alkyl;
E is O, S, or N-$R_{17}$, and $R_{17}$ is $C_1$-$C_5$ alkyl or $C_6$-$C_{12}$ aryl.

2. The metallocene complex according to claim 1, wherein in the formula I, $R_1$ and $R_6$ are each independently $C_1$-$C_5$ alkyl, $R_2$, $R_4$, $R_7$ and $R_9$ are each independently $C_6$-$C_{12}$ aryl, and $R_3$, $R_5$, $R_8$ and $R_{10}$ are all hydrogen;
preferably, $R_1$ and $R_6$ are methyl and $R_2$, $R_4$, $R_7$ and $R_9$ are phenyl.

3. The metallocene complex according to claim 1, wherein in the formula I, $R_1$, $R_4$, $R_6$ and $R_9$ are each independently $C_1$-$C_{20}$ alkyl, $R_2$ and $R_7$ are each independently $C_6$-$C_{30}$ aryl, and $R_3$, $R_5$, $R_8$ and $R_{10}$ are all hydrogen;

preferably, $R_1$, $R_4$, $R_6$ and $R_9$ are each independently $C_1$-$C_5$ alkyl, and $R_2$ and $R_7$ are each independently $C_6$-$C_{12}$ aryl;
more preferably, $R_1$, $R_4$, $R_6$ and $R_9$ are each independently methyl or isopropyl, and $R_2$ and $R_7$ are phenyl;
further preferably, $R_1$ and $R_6$ are methyl, $R_4$ and $R_9$ are methyl or isopropyl, and $R_2$ and $R_7$ are phenyl.

4. The metallocene complex according to claim 1, wherein in the formula I, $R_1$, $R_4$, $R_6$ and $R_9$ are each independently $C_1$-$C_{20}$ alkyl, $R_2$ and $R_7$ are each independently $C_6$-$C_{30}$ aryl, $R_5$ and $R_{10}$ are both hydrogen, $R_3$ and $R_8$ are each independently $-SiR_{23}R_{24}R_{25}$, and $R_{23}$, $R_{24}$ and $R_{25}$ are the same or different, and are each independently $C_1$-$C_{20}$ alkyl;

preferably, $R_1$, $R_4$, $R_6$ and $R_9$ are each independently $C_1$-$C_5$ alkyl, $R_2$ and $R_7$ are each independently $C_6$-$C_{12}$ aryl, $R_3$ and $R_8$ are each independently $-SiR_{23}R_{24}R_{25}$, $R_{23}$, $R_{24}$ and $R_{25}$ are the same or different, and are each independently hydrogen or $C_1$-$C_5$ alkyl, and at least one of $R_{23}$, $R_{24}$ and $R_{25}$ is $C_1$-$C_5$ alkyl;
more preferably, $R_1$, $R_4$, $R_6$ and $R_9$ are methyl, $R_2$ and $R_7$ are phenyl, $R_3$ and $R_8$ are each independently $-SiR_{23}R_{24}R_{25}$, and $R_{23}$, $R_{24}$ and $R_{25}$ are all methyl.

5. The metallocene complex according to any one of claims 1 to 4, wherein in the formula I, Ln is scandium or gadolinium.

6. The metallocene complex according to claim 1, wherein the metallocene complex is a complex shown in a formula II, a formula III, a formula IV or a formula V,

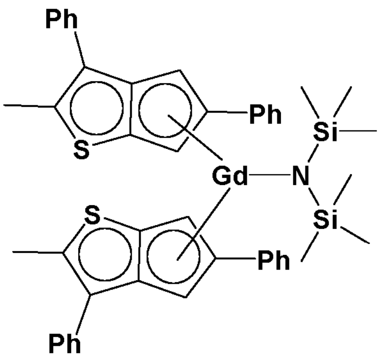

(Formula II)

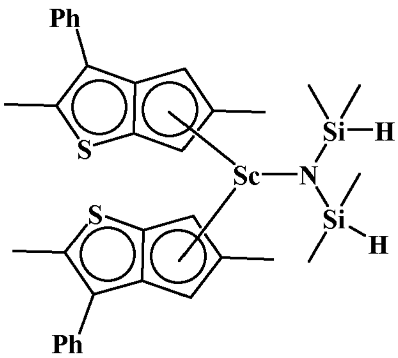

(Formula III)

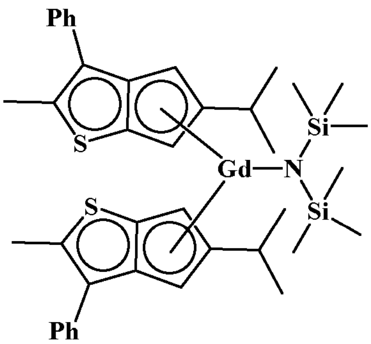

(Formula IV)

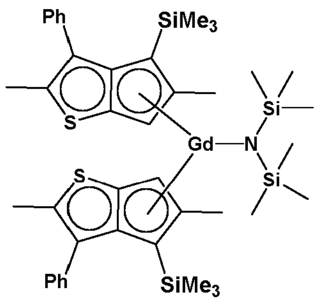

(Formula V).

7. A method for preparing the metallocene complex according to claim 1, comprising the steps of:

Step 1, contacting a precursor compound with a heterocyclic compound in the presence of organolithium, wherein the heterocyclic compound is selected from the group consisting of compounds represented by a formula 2-2-1 and compounds represented by a formula 2-2-2, and

Step 2, contacting a mixture obtained in the step 1 with an amine represented by a formula 2-3, wherein the precursor compound is selected from the group consisting of compounds represented by a formula 2-1,

LnX (Formula 2-1)

in the formula 2-1, Ln is a lanthanide, scandium, or yttrium,
X is a halogen atom, preferably chlorine;

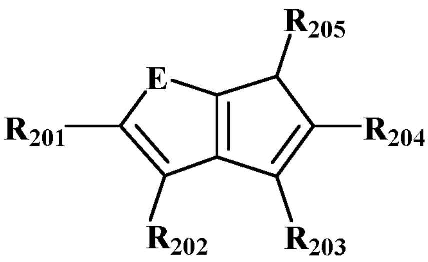

(Formula 2-2-1)

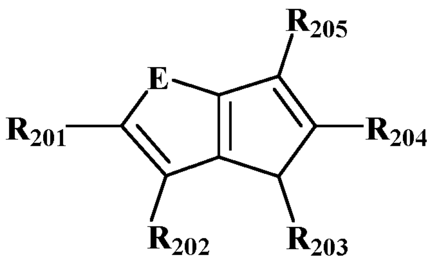

(Formula 2-2-2)

in the formula 2-2-1 and formula 2-2-2, $R_{201}$, $R_{202}$, $R_{203}$, $R_{204}$, and $R_{205}$ are the same or different, and are each independently hydrogen, $C_1$-$C_{20}$ alkyl, $C_6$-$C_{30}$ aryl or $-SiR_{23}R_{24}R_{25}$, and $R_{23}$, $R_{24}$, and $R_{25}$ are the same or different, and are each independently hydrogen or $C_1$-$C_{20}$ alkyl;
in the formula 2-2-1 and formula 2-2-2, E is O, S, or N-$R_{17}$, and $R_{17}$ is $C_1$-$C_5$ alkyl or $C_6$-$C_{12}$ aryl;

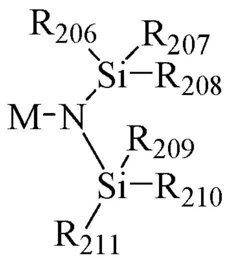

(Formula 2-3)

in the formula 2-3, $R_{206}$, $R_{207}$, $R_{208}$, $R_{209}$, $R_{210}$, and $R_{211}$ are the same or different, and are each independently hydrogen or $C_1$-$C_5$ alkyl,
M is an alkali metal atom, preferably potassium or sodium.

**8.** The method according to claim 7, wherein the mixture obtained after the contacting in the step 1 is directly used in the step 2 without separation;

preferably, the contacting in the step 1 is performed in a first solvent, the contacting in the step 2 is performed in a second solvent, the first solvent and the second solvent are different, and the method comprises removing at least part of the first solvent from the mixture obtained after the contacting in the step 1 to obtain a mixture with at least part of the first solvent removed, and mixing the mixture with at least part of the first solvent removed with the second solvent;
preferably, the first solvent is one or two or more selected from the group consisting of tetrahydrofuran, diethyl ether, dioxane and hexane, and the second solvent is one or two or more selected from the group consisting of toluene, xylene and chlorobenzene.

**9.** The method according to claim 7, wherein in the step 1, the organolithium is contacted with the heterocyclic compound selected from the group consisting of compounds represented by a formula 2-2-1 and compounds represented by a formula 2-2-2 to form a lithium salt, and the lithium salt is contacted with the precursor compound.

**10.** The method according to claim 7, wherein the contacting in the step 1 is performed at a temperature of 0-65°C for 1-120 h;
the contacting in the step 2 is performed at a temperature of 0-30°C for 1-48 h.

**11.** A catalyst composition, comprising a metallocene complex and a cocatalyst, the metallocene complex being the metallocene complex according to any one of claims 1 to 6.

**12.** The catalyst composition according to claim 11, wherein the cocatalyst is an organoaluminum compound and/or an organoboron compound;

preferably, the organoaluminum compound is aluminoxane and/or a compound represented by a formula V,

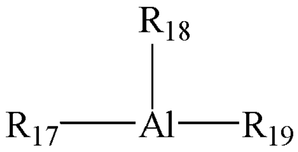

(Formula V)

in the formula V, $R_{17}$, $R_{18}$, and $R_{19}$ are the same or different, and are each independently selected from hydrogen, $C_1$-$C_{10}$ alkyl, $C_1$-$C_{10}$ alkoxy, $C_6$-$C_{20}$ aryl, $C_7$-$C_{15}$ alkaryl, $C_7$-$C_{15}$ aralkyl, and a hydrogen atom, and $R_{17}$, $R_{18}$, and $R_{19}$ are not simultaneously a hydrogen atom;
the organoaluminum compound is preferably triisobutylaluminum and/or diisobutylaluminum hydride;
preferably, the organoboron compound is an organoborate, preferably N,N-dimethylanilinium tetrakis(pentafluorophenyl)borate and/or trityl tetrakis(pentafluorophenyl)borate.

**13.** The catalyst composition according to claim 11, wherein the cocatalyst is an organoaluminum compound and an organoboron compound, the organoaluminum compound is preferably triisobutylaluminum and/or diisobutylaluminum hydride, and the organoboron compound is preferably N,N-dimethylanilinium tetrakis(pentafluorophenyl)borate and/or trityl tetrakis(pentafluorophenyl)borate;

preferably, a molar ratio of the organoaluminum compound to the organoboron compound in the cocatalyst is 1:0.01-100, preferably 1:0.1-90, more preferably 1:0.5-60, the organoaluminum compound being in terms of an aluminum element and the organoboron compound being in terms of a boron element; and
preferably, a molar ratio of the metallocene complex to the organoboron compound is 1:0.1-10, preferably 1:0.5-5.

**14.** An olefin polymerization method, comprising contacting at least one olefin with components in a catalyst composition under olefin polymerization conditions, the catalyst composition being the catalyst composition according to any one of claims 11 to 13;

preferably, the olefin is a conjugated diene or the olefin is ethylene and a conjugated diene;
preferably, the conjugated diene is butadiene and/or isoprene.

**Patentansprüche**

**1.** Metallocenkomplex mit einer in Formel I dargestellten Struktur

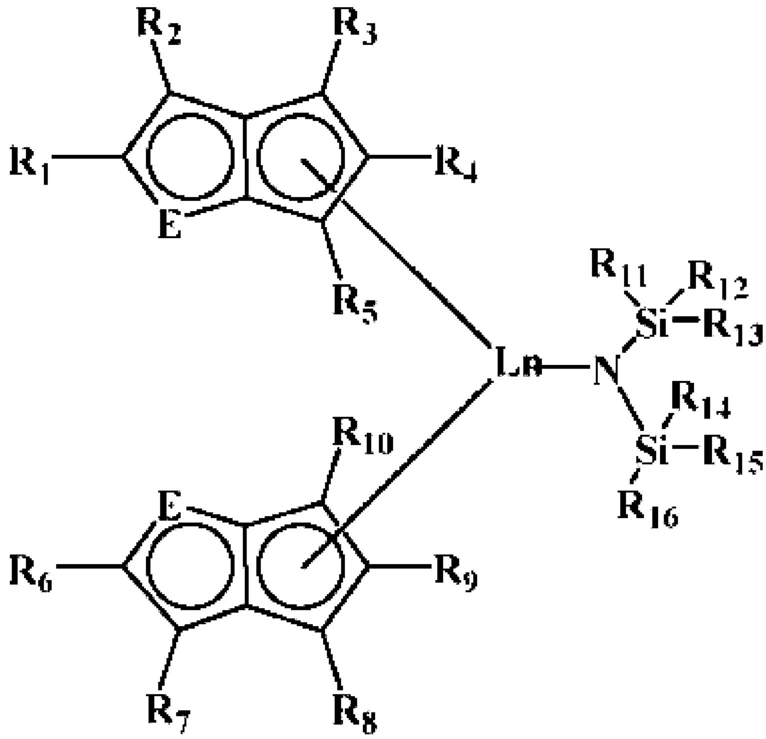

(Formel 1)

worin in der Formel I Ln ein Lanthanid, Scandium oder Yttrium ist;
$R_1$, $R_2$, $R_3$, $R_4$, $R_5$, $R_6$, $R_7$, $R_8$, $R_9$ und $R_{10}$ gleich oder voneinander verschieden sind und jeweils unabhängig Wasserstoff, $C_1$-$C_{20}$-Alkyl, $C_6$-$C_{30}$-Aryl oder -$SiR_{23}R_{24}R_{25}$ sind, und $R_{23}$, $R_{24}$ und $R_{25}$ gleich oder verschieden sind und jeweils unabhängig Wasserstoff oder $C_1$-$C_{20}$-Alkyl sind;
$R_{11}$, $R_{12}$, $R_{12}$, $R_{14}$, $R_{15}$ und $R_{16}$ gleich oder verschieden sind und jeweils unabhängig Wasserstoff oder $C_1$-$C_5$-Alkyl sind;
E O, S oder N-$R_{17}$ ist, und $R_{17}$ $C_1$-$C_5$-Alkyl oder $C_6$-$C_{12}$-Aryl ist.

2. Metallocenkomplex gemäß Anspruch 1, worin in der Formel I $R_1$ und $R_6$ jeweils unabhängig $C_1$-$C_5$-Alkyl sind, $R_2$, $R_4$, $R_7$ und $R_9$ jeweils unabhängig $C_6$-$C_{12}$-Aryl sind und $R_3$, $R_5$, $R_8$ und $R_{10}$ alle Wasserstoff sind;
worin bevorzugt $R_1$ und $R_6$ Methyl sind und $R_2$, $R_4$, $R_7$ und $R_9$ Phenyl sind.

3. Metallocenkomplex gemäß Anspruch 1, worin in der Formel I $R_1$, $R_4$, $R_6$ und $R_9$ jeweils unabhängig $C_1$-$C_{20}$-Alkyl sind, $R_2$ und $R_7$ jeweils unabhängig $C_6$-$C_{30}$-Aryl sind und $R_3$, $R_5$, $R_8$ und $R_{10}$ alle Wasserstoff sind;

worin bevorzugt $R_1$, $R_4$, $R_6$ und $R_9$ jeweils unabhängig $C_1$-$C_5$-Alkyl sind und $R_2$ und $R_7$ jeweils unabhängig $C_6$-$C_{12}$-Aryl sind;
worin stärker bevorzugt $R_1$, $R_4$, $R_6$ und $R_9$ jeweils unabhängig Methyl oder Isopropyl sind und $R_2$ und $R_7$ Phenyl sind;
worin stärker bevorzugt $R_1$ und $R_6$ Methyl sind, $R_4$ und $R_9$ Methyl oder Isopropyl sind und $R_2$ und $R_7$ Phenyl sind.

4. Metallocenkomplex gemäß Anspruch 1, worin in der Formel I $R_1$, $R_4$, $R_6$ und $R_9$ jeweils unabhängig $C_1$-$C_{20}$-Alkyl sind, $R_2$ und $R_7$ jeweils unabhängig $C_6$-$C_{30}$-Aryl sind, $R_5$ und $R_{10}$ beide Wasserstoff sind, $R_3$ und $R_8$ jeweils unabhängig -$SiR_{23}R_{24}R_{25}$ sind und $R_{23}$, $R_{24}$ und $R_{25}$ gleich oder verschieden sind und jeweils unabhängig $C_1$-$C_{20}$-Alkyl sind;

worin bevorzugt $R_1$, $R_4$, $R_6$ und $R_9$ jeweils unabhängig $C_1$-$C_5$-Alkyl sind, $R_2$ und $R_7$ jeweils unabhängig $C_6$-$C_{12}$-Aryl sind, $R_3$ und $R_8$ jeweils unabhängig -$SiR_{23}R_{24}R_{25}$ sind, $R_{23}$, $R_{24}$ und $R_{25}$ gleich oder verschieden sind und jeweils unabhängig Wasserstoff oder $C_1$-$C_5$-Alkyl sind und zumindest eines von $R_{23}$, $R_{24}$ und $R_{25}$ $C_1$-$C_5$-Alkyl ist;
worin stärker bevorzugt $R_1$, $R_4$, $R_6$ und $R_9$ Methyl sind, $R_2$ und $R_7$ Phenyl sind , $R_3$ und $R_8$ jeweils unabhängig -$SiR_{23}R_{24}R_{25}$ sind und $R_{23}$, $R_{24}$ und $R_{25}$ alle Methyl sind.

5. Metallocenkomplex gemäß irgendeinem der Ansprüche 1 bis 4, worin Ln in der Formel I Scandium oder Gadolinium

ist.

**6.** Metallocenkomplex gemäß Anspruch 1, worin der Metallocenkomplex ein in Formel II, Formel III, Formel IV oder Formel V gezeigter Komplex ist

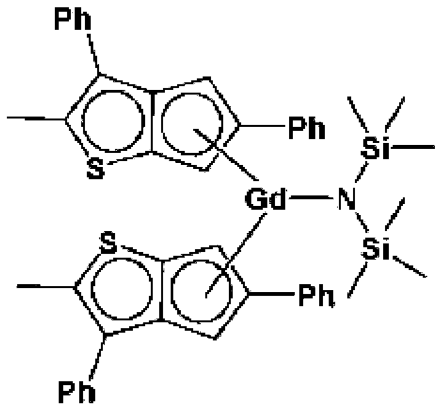

(Formel II)

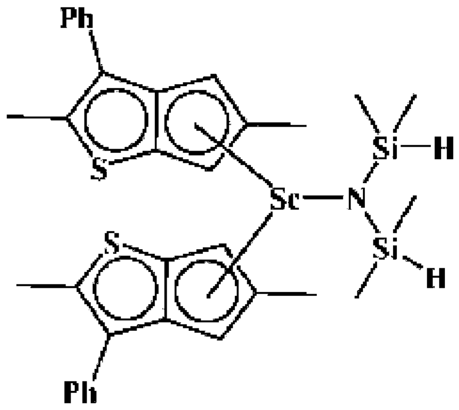

(Formel III)

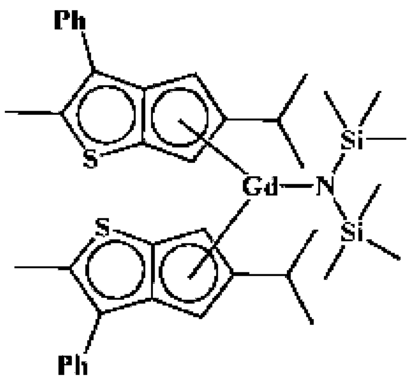

(Formel IV)

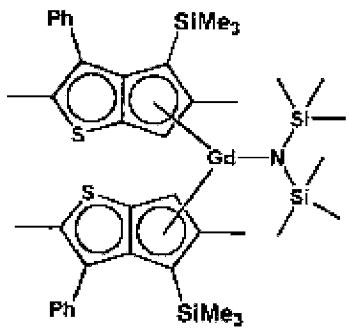

(Formel V).

**7.** Verfahren zur Herstellung des Metallocenkomplexes gemäß Anspruch 1, umfassend die Schritte:

Schritt 1: Inkontaktbringen einer Vorläuferverbindung mit einer heterocyclischen Verbindung in der Gegenwart von Organolithium, worin die heterocyclische Verbindung ausgewählt mit aus der Gruppe, bestehend aus durch die Formel 2-2-1 dargestellten Verbindungen und durch die Formel 2-2-2 dargestellten Verbindungen, und
Schritt 2: Inkontaktbringen einer in Schritt 1 erhaltenen Mischung mit einem durch die Formel 2-3 dargestellten Amin, worin
die Vorläuferverbindung ausgewählt ist aus der Gruppe, bestehend aus durch die Formel 2-1 dargestellten Verbindungen

LnX (Formel 2-1)

worin in der Formel 2-1 Ln ein Lanthanid, Scandium oder Yttrium ist,
X ein Halogenatom, bevorzugt Chlor, ist;

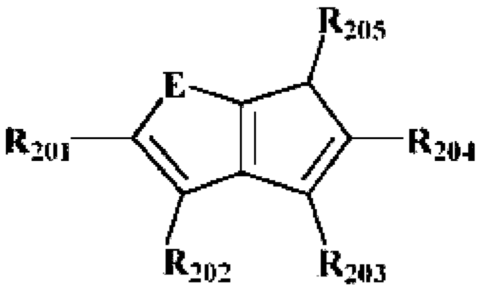

(Formel 2-2-1)

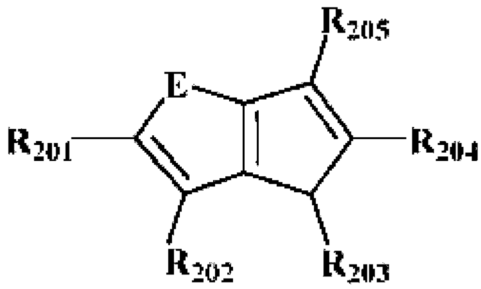

(Formel 2-2-2)

worin in der Formel 2-2-1 und in der Formel 2-2-2 $R_{201}$, $R_{202}$, $R_{203}$, $R_{204}$ und $R_{205}$ gleich oder verschieden sind und jeweils unabhängig Wasserstoff, $C_1$-$C_{20}$-Alkyl, $C_6$-$C_{30}$-Aryl oder -$SiR_{23}R_{24}R_{25}$ sind, und $R_{23}$, $R_{24}$ und $R_{25}$ gleich oder verschieden sind und jeweils unabhängig Wasserstoff oder $C_1$-$C_{20}$-Alkyl sind;
in der Formel 2-2-1 und der Formel 2-2-2 E O, S oder N-$R_{17}$ ist, und $R_{17}$ $C_1$-$C_5$-Alkyl oder $C_6$-$C_{12}$-Aryl ist;

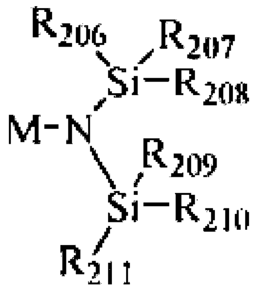

(Formel 2-3)

worin in der Formel 2-3 $R_{206}$, $R_{207}$, $R_{208}$, $R_{209}$, $R_{210}$ und $R_{211}$ gleich oder verschieden sind und jeweils unabhängig Wasserstoff oder $C_1$-$C_5$-Alkyl sind,
M ein Alkalimetallatom ist, bevorzugt Kalium oder Natrium.

**8.** Verfahren gemäß Anspruch 7, worin die nach dem Inkontaktbringen im Schritt 1 erhaltene Mischung ohne Trennung direkt im Schritt 2 verwendet wird;

worin bevorzugt das Inkontaktbringen im Schritt 1 in einem ersten Lösungsmittel durchgeführt wird, das Inkontaktbringen im Schritt 2 in einem zweiten Lösungsmittel durchgeführt wird, wobei das erste Lösungsmittel und das zweite Lösungsmittel verschieden sind, und das Verfahren das Entfernen von zumindest einem Teil des ersten Lösungsmittels von der Mischung, die nach dem Inkontaktbringen im Schritt 1 erhalten wird, umfasst, um eine Mischung zu erhalten, worin zumindest ein Teil des ersten Lösungsmittels entfernt ist, und Mischen der Mischung, worin zumindest ein Teil des ersten Lösungsmittels entfernt ist, mit dem zweiten Lösungsmittel;
worin bevorzugt das erste Lösungsmittel eines oder zwei oder mehrere ist, ausgewählt aus der Gruppe bestehend aus Tetrahydrofuran, Diethylether, Dioxan und Hexan, und das zweite Lösungsmittel eines oder zwei oder mehrere ist, ausgewählt aus der Gruppe, bestehend aus Toluol, Xylol und Chlorbenzol.

**9.** Verfahren gemäß Anspruch 7, worin im Schritt 1 das Organolithium mit der heterocyclischen Verbindung, die aus der Gruppe ausgewählt ist bestehend aus durch die Formel 2-2-1 dargestellten Verbindungen und durch die Formel 2-2-2 dargestellten Verbindungen, in Kontakt gebracht wird, um ein Lithiumsalz zu bilden, und das Lithiumsalz mit der Vorläuferverbindung in Kontakt gebracht wird.

**10.** Verfahren gemäß Anspruch 7, worin das Inkontaktbringen im Schritt 1 bei einer Temperatur von 0-65°C für 1-120 h durchgeführt wird;
das Inkontaktbringen im Schritt 2 bei einer Temperatur von 0-30°C für 1-48 h durchgeführt wird.

**11.** Katalysatorzusammensetzung, umfassend einen Metallocenkomplex und einen Cokatalysator, wobei der Metallocenkomplex der Metallocenkomplex gemäß irgendeinem der Ansprüche 1 bis 6 ist.

**12.** Katalysatorzusammensetzung gemäß Anspruch 11, worin der Cokatalysator eine Organoaluminiumverbindung

und/oder eine Organoborverbindung ist;

worin bevorzugt die Organoaluminiumverbindung Aluminoxan und/oder eine durch die Formel V dargestellte Verbindung ist:

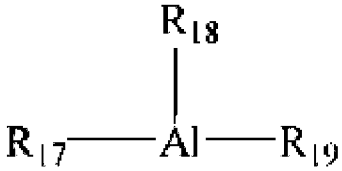

(Formel V)

worin in der Formel V $R_{17}$, $R_{18}$ und $R_{19}$ gleich oder verschieden sind und jeweils unabhängig ausgewählt sind aus Wasserstoff, $C_1$-$C_{10}$-Alkyl, $C_1$-$C_{10}$-Alkoxy, $C_6$-$C_{20}$-Aryl, $C_7$-$C_{15}$-Alkaryl, $C_7$-$C_{15}$-Aralkyl und einem Wasserstoffatom, und $R_{17}$, $R_{18}$ und $R_{19}$ nicht gleichzeitig ein Wasserstoffatom sind;
worin die Organoaluminiumverbindung bevorzugt Triisobutylaluminium und/oder Diisobutylaluminiumhydrid ist;
worin bevorzugt die Organoborverbindung ein Organoborat ist, bevorzugt N,N-Dimethylaniliniumtetrakis(pentafluorphenyl)borat und/oder Trityltetrakis(pentafluorphenyl)borat.

**13.** Katalysatorzusammensetzung gemäß Anspruch 11, worin der Cokatalysator eine Organoaluminiumverbindung und eine Organoborverbindung ist, worin die Organoaluminiumverbindung bevorzugt Triisobutylaluminium und/oder Diisobutylaluminiumhydrid ist und die Organoborverbindung bevorzugt N,N-Dimethylaniliniumtetrakis(pentafluorphenyl)borat und/oder Trityltetrakis(pentafluorphenyl)borat ist;

worin bevorzugt das molare Verhältnis der Organoaluminiumverbindung zur Organoborverbindung in dem Cokatalysator 1:0,01-100, bevorzugt 1:0,1-90, stärker bevorzugt 1:0,5-60, beträgt, wobei die Organoaluminiumverbindung ausgedrückt ist als Aluminiumelement und die Organoborverbindung ausgedrückt ist als Borelement; und
worin bevorzugt das molare Verhältnis des Metallocenkomplexes zur Organoborverbindung 1:0,1-10, bevorzugt 1:0,5-5, beträgt.

**14.** Olefin-Polymerisationsverfahren, umfassend das Inkontaktbringen von zumindest einem Olefin mit Komponenten in einer Katalysatorzusammensetzung unter Olefin-Polymerisationsbedingungen, worin die Katalysatorzusammensetzung die Katalysatorzusammensetzung gemäß irgendeinem der Ansprüche 11 bis 13 ist;

worin bevorzugt das Olefin ein konjugiertes Dien ist oder das Olefin Ethylen und ein konjugiertes Dien ist;
worin bevorzugt das konjugierte Dien Butadien und/oder Isopren ist.

## Revendications

**1.** Complexe métallocène répondant à la structure représentée par la formule I,

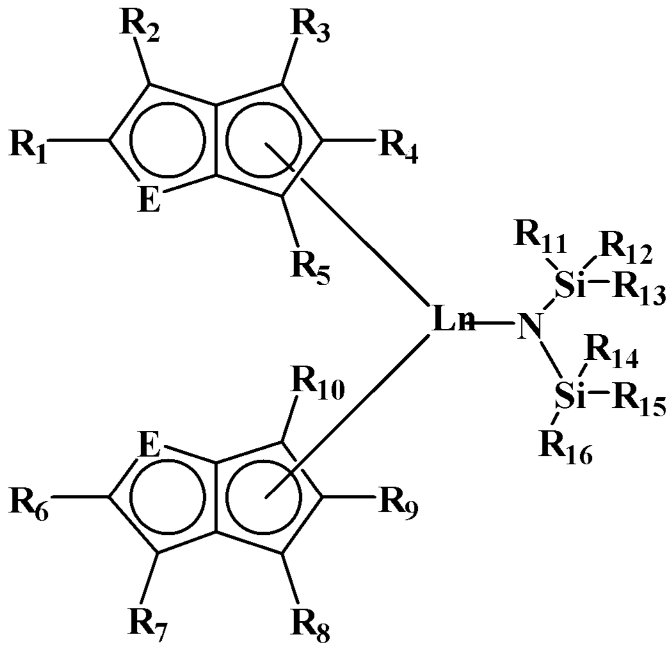

(Formule I)

dans laquelle, dans la formule I, Ln représente un lanthanide, le scandium ou l'yttrium ;
$R_1$, $R_2$, $R_3$, $R_4$, $R_5$, $R_6$, $R_7$, $R_8$, $R_9$ et $R_{10}$ sont identiques ou différents, et représentent chacun indépendamment un atome d'hydrogène, un groupe alkyle en $C_1$ à $C_{20}$, un groupe aryle en $C_5$ à $C_{30}$ ou $-SiR_{23}R_{24}R_{25}$, et $R_{23}$, $R_{24}$ et $R_{25}$ sont identiques ou différents, et représentent chacun indépendamment un atome d'hydrogène ou un groupe alkyle en $C_1$ à $C_{20}$ ;
$R_{11}$, $R_{12}$, $R_{13}$, $R_{14}$, $R_{15}$ et $R_{16}$ sont identiques ou différents, et représentent chacun indépendamment un atome d'hydrogène ou un groupe alkyle en $C_1$ à $C_5$ ;
E représente O, S ou N-$R_{17}$, et $R_{17}$ représente un groupe alkyle en $C_1$ à $C_5$ ou aryle en $C_6$ à $C_{12}$.

**2.** Le complexe métallocène selon la revendication 1, dans lequel, dans la formule I, $R_1$ et $R_6$ représentent chacun indépendamment un groupe alkyle en $C_1$ à $C_5$, $R_2$, $R_4$, $R_7$ et $R_9$ représentent chacun indépendamment un groupe aryle en $C_6$ à $C_{12}$, et $R_3$, $R_5$, $R_8$ et $R_{10}$ représentent tous un atome d'hydrogène ;
préférablement, $R_1$ et $R_6$ représentent un groupe méthyle et $R_2$, $R_4$, $R_7$ et $R_9$ représentent un groupe phényle.

**3.** Le complexe métallocène selon la revendication 1, dans lequel, dans la formule I, $R_1$, $R_4$, $R_6$ et $R_9$ représentent chacun indépendamment un groupe alkyle en $C_1$ à $C_{20}$, $R_2$ et $R_7$ représentent chacun indépendamment un groupe aryle en $C_6$ à $C_{30}$, et $R_3$, $R_5$, $R_8$ et $R_{10}$ représentent tous un atome d'hydrogène ;

préférablement, $R_1$, $R_4$, $R_6$ et $R_9$ représentent chacun indépendamment un groupe alkyle en $C_1$ à $C_5$, et $R_2$ et $R_7$ représentent chacun indépendamment un groupe aryle en $C_6$ à $C_{12}$ ;
plus préférablement, $R_1$, $R_4$, $R_6$ et $R_9$ représentent chacun indépendamment un groupe méthyle ou isopropyle, et $R_2$ et $R_7$ représentent un groupe phényle ;
préférablement encore, $R_1$ et $R_6$ représentent un groupe méthyle, $R_4$ et $R_9$ représentent un groupe méthyle ou isopropyle, et $R_2$ et $R_7$ représentent un groupe phényle.

**4.** Le complexe métallocène selon la revendication 1, dans lequel, dans la formule I, $R_1$, $R_4$, $R_6$ et $R_9$ représentent chacun indépendamment un groupe alkyle en $C_1$ à $C_{20}$, $R_2$ et $R_7$ représentent chacun indépendamment un groupe aryle en $C_6$ à $C_{30}$, $R_5$ et $R_{10}$ représentent tous deux un atome d'hydrogène, $R_3$ et $R_8$ représentent chacun indépendamment $-SiR_{23}R_{24}R_{25}$, et $R_{23}$, $R_{24}$ et $R_{25}$ sont identiques ou différents, et représentent chacun indépendamment un groupe alkyle en $C_1$ à $C_{20}$ ; de

préférence, $R_1$, $R_4$, $R_6$ et $R_9$ représentent chacun indépendamment un groupe alkyle en $C_1$ à $C_5$, $R_2$ et $R_7$ représentent chacun indépendamment un groupe aryle en $C_6$ à $C_{12}$, $R_3$ et $R_8$ représentent chacun indépendamment - $SiR_{23}R_{24}R_{25}$, $R_{23}$, $R_{24}$ et $R_{25}$ sont identiques ou différents, et représentent chacun indépendamment un atome d'hydrogène ou un groupe alkyle en $C_1$ à $C_5$, et au moins l'un parmi $R_{23}$, $R_{24}$ et $R_{25}$ est un groupe alkyle en $C_1$ à $C_5$ ;

préférablement, $R_1$, $R_4$, $R_6$ et $R_9$ représentent un groupe méthyle, $R_2$ et $R_7$ représentent un groupe phényle, $R_3$ et $R_8$ représentent chacun indépendamment -$SiR_{23}R_{24}R_{25}$, et $R_{23}$, $R_{24}$ et $R_{25}$ représentent tous un groupe méthyle.

5. Le complexe métallocène selon l'une quelconque des revendications 1 à 4, dans lequel, dans la formule I, Ln représente le scandium ou le gadolinium.

6. Le complexe métallocène selon la revendication 1, dans lequel le complexe métallocène est un complexe représenté par la formule II, la formule III, la formule IV ou la formule V,

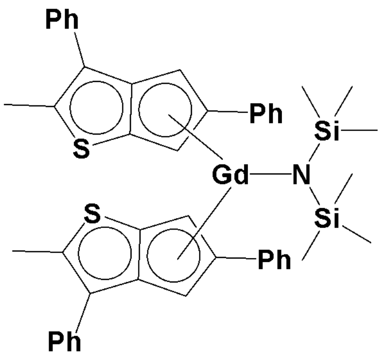

(Formule II)

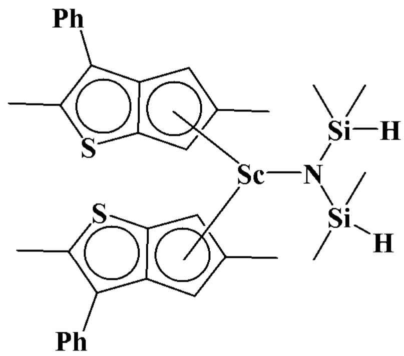

(Formule III)

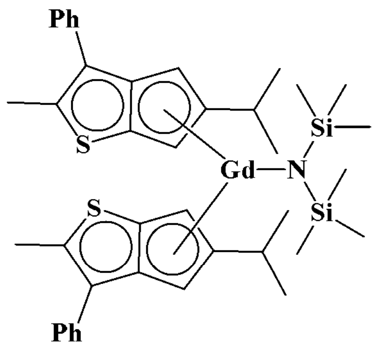

(Formule IV)

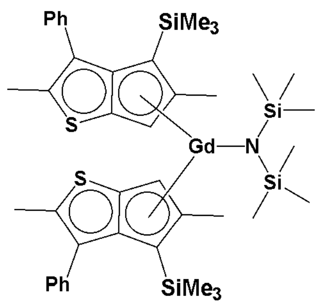

(Formule V).

7. Procédé de préparation du complexe métallocène selon la revendication 1, comprenant les étapes suivantes :

Étape 1, mise en contact d'un composé précurseur avec un composé hétérocyclique en présence d'un composé organolithien, le composé hétérocyclique étant choisi parmi le groupe constitué des composés représentés par la formule 2-2-1 et des composés représentés par la formule 2-2-2, et
Étape 2, mettre en contact un mélange obtenu à l'étape 1 avec une amine représentée par la formule 2-3, dans laquelle
le composé précurseur est choisi dans le groupe constitué des composés représentés par la formule 2-1,

LnX (Formule 2-1)

dans la formule 2-1, Ln est un lanthanide, le scandium ou l'yttrium,
X est un atome d'halogène, préférablement le chlore ;

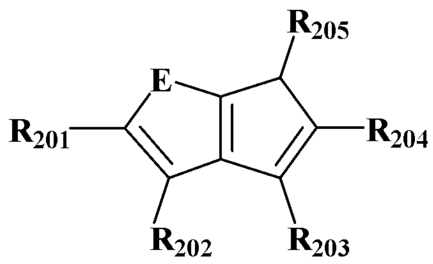

(Formule 2-2-1)

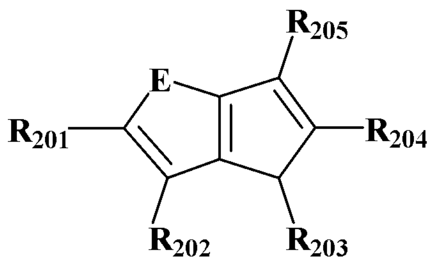

(Formule 2-2-2)

dans les formules 2-2-1 et 2-2-2, $R_{201}$, $R_{202}$, $R_{203}$, $R_{204}$ et $R_{205}$ sont identiques ou différents, et représentent chacun indépendamment un atome d'hydrogène, un groupe alkyle en $C_1$ à $C_{20}$, un groupe aryle en $C_6$ à $C_{30}$ ou -$SiR_{23}R_{24}R_{25}$, et $R_{23}$, $R_{24}$ et $R_{25}$ sont identiques ou
différents, et représentent chacun indépendamment un atome d'hydrogène ou un groupe alkyle en $C_1$ à $C_{20}$ ;
dans la formule 2-2-1 et la formule 2-2-2, E représente O, S ou N-$R_{17}$, et $R_{17}$ représente un groupe alkyle en $C_1$ à $C_5$ ou aryle en $C_6$ à C12 ;

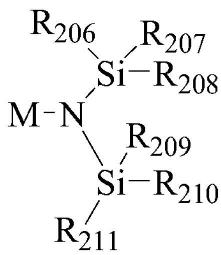

(Formule 2-3)

dans la formule 2-3, $R_{206}$, $R_{207}$, $R_{208}$, $R_{209}$, $R_{210}$ et $R_{211}$ sont identiques ou différents, et représentent chacun, indépendamment, un atome d'hydrogène ou un groupe alkyle en $C_1$-$C_5$,
M est un atome de métal alcalin, préférablement le potassium ou le sodium.

8. Le procédé selon la revendication 7, dans lequel le mélange obtenu après la mise en contact à l'étape 1 est directement utilisé à l'étape 2 sans séparation ; préférablement, la mise en contact de l'étape 1 est effectuée dans un premier solvant, la mise en contact de l'étape 2 est effectuée dans un second solvant, le premier solvant et le second solvant sont différents, et le procédé comprend l'élimination d'au moins une partie du premier solvant du mélange obtenu après la mise en contact de l'étape 1 pour obtenir un mélange dont au moins une partie du premier solvant a été éliminée, et le mélange du mélange dont au moins une partie du premier solvant a été éliminée avec le second solvant ; préférablement, le premier solvant est un ou deux ou plusieurs choisis dans le groupe constitué du tétrahydrofurane, de l'éther diéthylique, du dioxane et de l'hexane, et le second solvant est un ou deux ou plusieurs choisis dans le groupe constitué du toluène, du xylène et du chlorobenzène.

9. Le procédé selon la revendication 7, dans lequel, à l'étape 1, l'organolithium est mis en contact avec le composé hétérocyclique choisi parmi le groupe constitué des composés représentés par la formule 2-2-1 et des composés représentés par la formule 2-2-2 pour former un sel de lithium, et le sel de lithium est mis en contact avec le composé précurseur.

10. Le procédé selon la revendication 7, dans lequel la mise en contact à l'étape 1 est effectuée à une température de 0 à 65 °C pendant 1 à 120 h ;
la mise en contact à l'étape 2 est effectuée à une température de 0 à 30 °C pendant 1 à 48 h.

11. Composition catalytique, comprenant un complexe métallocène et un cocatalyseur, le complexe métallocène étant le complexe métallocène selon l'une quelconque des revendications 1 à 6.

12. La composition catalytique selon la revendication 11, dans laquelle le cocatalyseur est un composé organoaluminique et/ou un composé organoboré ; préférablement, le composé organoaluminique est un aluminoxane et/ou un composé représenté par la formule V,

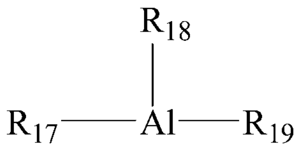

(Formule V)

dans la formule V, $R_{17}$, $R_{18}$ et $R_{19}$ sont identiques ou différents, et sont chacun choisis indépendamment parmi l'hydrogène, un groupe alkyle en $C_1$ à $C_{10}$, un groupe alcoxy en $C_1$ à $C_{10}$, un groupe aryle en $C_6$ à $C_{20}$, un groupe alkaryle en $C_7$ à $C_{15}$, un groupe aralkyle en $C_7$ à $C_{15}$ et un atome d'hydrogène, et $R_{17}$, $R_{18}$ et $R_{19}$ ne sont pas simultanément des atomes d'hydrogène ;
le composé organoaluminique est préférablement le triisobutylaluminium et/ou l'hydrure de diisobutylaluminium ;
préférablement, le composé organoboré est un organoborate, préférablement le tétrakis(pentafluorophényl) borate de N,N-diméthylanilinium et/ou le tétrakis(pentafluorophényl)borate de trityle.

**13.** La composition catalytique selon la revendication 11, dans laquelle le cocatalyseur est un composé organoaluminique et un composé organoboré, le composé organoaluminique est préférablement le triisobutylaluminium et/ou l'hydrure de diisobutylaluminium, et le composé organoboré est préférablement le N-diméthylanilinium tétrakis(pentafluorophényl)borate et/ou le tétrakis(pentafluorophényl)borate de trityle ; préférablement, le rapport molaire du composé organoaluminique au composé organoboré dans le cocatalyseur est de 1:0,01-100, préférablement de 1:0,1-90, plus préférablement de 1:0,5-60, le composé organoaluminique étant exprimé en élément aluminium et le composé organoboré étant exprimé en élément bore ; et préférablement, le rapport molaire du complexe métallocène au composé organoboré est de 1:0,1-10, préférablement de 1:0,5-5.

**14.** Procédé de polymérisation d'oléfines, comprenant la mise en contact d'au moins une oléfine avec des composants d'une composition catalytique dans des conditions de polymérisation d'oléfines, la composition catalytique étant la composition catalytique selon l'une quelconque des revendications 11 à 13 ;
préférablement, l'oléfine est un diène conjugué ou l'oléfine est l'éthylène et un diène conjugué ; préférablement, le diène conjugué est le butadiène et/ou l'isoprène.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202210586608


### Non-patent literature cited in the description


- **K. MICHIUE** ; **M. MITANI** ; **T. FUJITA**. *Catalysts*, 2015, vol. 5, 2001-2017
- **M. LLAURO** ; **C. MONNET** ; **F. BARBOTIN** ; **V. MONTEIL** ; **R. SPITZ** ; **C. BOISSON**. *Macromolecules*, 2001, vol. 34, 6304-6311
- **H. NSIRI** ; **I. BELAID** ; **P. LARINI** ; **J. THUILLIEZ** ; **C. BOISSON** ; **L. PERRIN**. *ACS Catal.*, 2016, vol. 6, 1028-1036
- **CHEN et al.** Synthesis of Heterocyclic-Fused Cyclopentadienyl Scandium Complexes and the Catalysis for Copolymerization of Ethylene and Dicyclopentadiene. *Organometallics*, 2015, vol. 34 (2)
- *Dalton Trans.*, 2008, 2531-2533
- *Angew. Chem. Int. Ed.*, 2017, vol. 56, 6975-6979